(19)

Europäisches
Patentamt
European
Patent Office
Office européen
des brevets

(11) **EP 4 779 890 A1**

(12) **EUROPEAN PATENT APPLICATION**
published in accordance with Art. 153(4) EPC

(43) Date of publication:
**22.07.2026 Bulletin 2026/30**

(21) Application number: **24870428.0**

(22) Date of filing: **09.09.2024**

(51) International Patent Classification (IPC):
***H04B 7/06*** (2006.01)

(52) Cooperative Patent Classification (CPC):
**H04B 7/06**

(86) International application number:
**PCT/CN2024/117733**

(87) International publication number:
**WO 2025/066883 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311283262**

(71) Applicant: **HUAWEI TECHNOLOGIES CO., LTD.**
**Shenzhen 518129 (CN)**

(72) Inventors:
• YE, Chencheng
  Shenzhen, Guangdong 518129 (CN)
• YUAN, Yiling
  Shenzhen, Guangdong 518129 (CN)
• GAO, Junhui
  Shenzhen, Guangdong 518129 (CN)
• WANG, Xiaohan
  Shenzhen, Guangdong 518129 (CN)

(74) Representative: **Isarpatent**
**Patent- und Rechtsanwälte Part G mbB**
**Friedrichstrasse 31**
**80801 München (DE)**

(54) **BASE FEEDBACK METHOD AND APPARATUS**

(57)    A basis feedback method and an apparatus are provided, and relate to the field of communication technologies, to implement an effective solution of feeding back a weighting coefficient matrix in a non-DFT basis. In this application, when a spatial domain eigenbasis and a frequency domain eigenbasis (or a space-frequency eigenbasis) are reported, the spatial domain eigenbasis and the frequency domain eigenbasis are decomposed based on a spatial domain basis and a frequency domain basis (or the space-frequency eigenbasis is decomposed based on a space-frequency basis); the spatial domain eigenbasis and the frequency domain eigenbasis (or the space-frequency eigenbasis) are respectively indicated by reporting weighting coefficients obtained through decomposition; and a reporting priority of the weighting coefficient is associated with a sequence number of a spatial domain basis, a sequence number of a frequency domain basis, a sequence number of a spatial domain eigenbasis, and a sequence number of a frequency domain eigenbasis. In addition, in this application, it is ensured as much as possible that a coefficient with a larger amplitude has a higher priority, that is, the coefficient is preferentially fed back, and a coefficient with a smaller amplitude is preferentially discarded, to ensure reporting precision and improve system performance.

Access network device — Terminal device

301: Reference signal

302: First indication information, where the first indication information indicates a first weighting coefficient matrix and a second weighting coefficient matrix, where reporting priorities of a plurality of non-zero first weighting coefficients in the first weighting coefficient matrix are related to sequence numbers of spatial domain bases associated with the non-zero first weighting coefficients and sequence numbers of spatial domain eigenbases associated with the non-zero first weighting coefficients, and reporting priorities of a plurality of non-zero second weighting coefficients in the second weighting coefficient matrix are related to sequence numbers of frequency domain bases associated with the non-zero second weighting coefficients and sequence numbers of frequency domain eigenbases associated with the non-zero second weighting coefficients

FIG. 3

**Description**

<u>CROSS-REFERENCE TO RELATED APPLICATIONS</u>

This application claims priority to Chinese Patent Application No. 202311283262.9, filed with the China National Intellectual Property Administration on September 28, 2023 and entitled "BASIS FEEDBACK METHOD AND APPARATUS", which is incorporated herein by reference in its entirety.

<u>TECHNICAL FIELD</u>

This application relates to the field of communication technologies, and in particular, to a basis feedback method and an apparatus.

<u>BACKGROUND</u>

In a 5th generation (5th generation, 5G) communication system, application of a massive multiple-antenna (massive multiple-input multiple-output, massive MIMO) technology plays a crucial role in improving spectral efficiency of the system. When the MIMO technology is used, before sending data to a terminal device, a base station needs to precode the data based on channel state information (channel state information, CSI) fed back by the terminal device to the base station. Accurate CSI is an important factor affecting system performance.

The CSI includes information such as a channel quality indicator (channel quality indicator, CQI), a precoding matrix indicator (precoding matrix indicator, PMI), and a rank indication (rank indication, RI). The PMI that needs to be fed back includes a location of a non-zero coefficient in a weighting coefficient matrix and an amplitude and a phase of the non-zero coefficient. When the terminal feeds back the PMI by using a communication standard release 16 (release 16, R16) codebook or a communication standard release 17 (release 17, R17) codebook, each weighting coefficient corresponds to one spatial domain basis and one frequency domain basis. Both the spatial domain basis and the frequency domain basis are DFT vectors. In the technology, a smaller quantity of non-zero coefficients in the fed-back weighting coefficient matrix indicates lower feedback overheads.

Currently, a quantity of fed-back non-zero coefficients is reduced to reduce feedback overheads. Decomposition of a precoding matrix into non-DFT bases, for example, a spatial domain eigenbasis and a frequency domain eigenbasis, is considered. The spatial domain eigenbasis and the frequency domain eigenbasis may be non-DFT bases obtained by the terminal device by using historical channel statistics, and feedback overheads of weighting coefficients in the non-DFT bases obtained through statistics collection are lower.

However, currently, there is no effective manner of feeding back a weighting coefficient matrix in a non-DFT basis.

<u>SUMMARY</u>

Embodiments of this application provide a basis feedback method and an apparatus, to implement an effective method for feeding back a weighting coefficient matrix in a non-DFT basis.

According to a first aspect, an embodiment of this application provides a basis feedback method, including: receiving a reference signal from an access network device, where the reference signal indicates a terminal device to feed back a used spatial domain eigenbasis and a used frequency domain eigenbasis; and sending first indication information to the access network device, where the first indication information indicates a first weighting coefficient matrix and a second weighting coefficient matrix, where a weighted sum of the first weighting coefficient matrix and 2L' spatial domain bases in a spatial domain basis set is used to determine $K_s$ spatial domain eigenbases, and a weighted sum of the second weighting coefficient matrix and $M_v$' frequency domain bases in a frequency domain basis set is used to determine $K_f$ frequency domain eigenbases; and reporting priorities of a plurality of non-zero first weighting coefficients in the first weighting coefficient matrix are related to sequence numbers of spatial domain bases associated with the non-zero first weighting coefficients and sequence numbers of spatial domain eigenbases associated with the non-zero first weighting coefficients, and reporting priorities of a plurality of non-zero second weighting coefficients in the second weighting coefficient matrix are related to sequence numbers of frequency domain bases associated with the non-zero second weighting coefficients and sequence numbers of frequency domain eigenbases associated with the non-zero second weighting coefficients.

In this application, a difference between a spatial domain basis and a frequency domain basis and a spatial domain eigenbasis and a frequency domain eigenbasis lies in that the spatial domain basis may be a DFT vector, a conjugate transpose vector of a DFT vector, or an over-sampled DFT vector, and the frequency domain basis may be a DFT vector, a conjugate transpose vector of the DFT vector, or an over-sampled DFT vector. For example, the spatial domain basis and the frequency domain basis each are a DFT vector; or the spatial domain basis and the frequency domain basis each are an over-sampled DFT vector; or the spatial domain basis is a DFT vector, and the frequency domain basis is an over-sampled DFT vector; or the spatial domain basis is an over-sampled DFT vector, and the frequency domain basis is a DFT vector.

It may be understood that the first weighting coefficient matrix includes $2L'K_s$ first weighting coefficients, each of the $2L'K_s$ first weighting coefficients is associated with one of the $K_s$ spatial domain eigenbases and one of the $2L'$ spatial domain bases, the first weighting coefficient may be represented as $C_s(i, k^1)$, $i$ represents a sequence number of the selected spatial domain basis, $k^1$ represents a sequence number of the spatial domain eigenbasis, $i = 0, 1, ...,$ or $2L - 1$, and $k^1 = 0, 1, ...,$ or $K_s - 1$. The $K_s$ spatial domain eigenbases may be determined based on a weighted sum of the $2L' * K_s$ first weighting coefficients and the $2L'$ spatial domain bases, and a weighting coefficient used for the weighted sum of the $2L'$ spatial domain bases is the first weighting coefficient. The second weighting coefficient matrix includes $M_v' * K_f$ second weighting coefficients, each of the $M_v' * K_f$ second weighting coefficients is associated with one of the $K_f$ frequency domain eigenbases and one of the $M_v'$ frequency domain bases. The $K_f$ frequency domain eigenbases may be determined based on a weighted sum of the $M_v'*K_f$ second weighting coefficients and the $M_v'$ frequency domain bases. A weighting coefficient used for the weighted sum of the $M_v'$ frequency domain bases is the second weighting coefficient. The first weighting coefficient may be represented as $C_f(f, k^2)$, $f$ represents a sequence number of the selected frequency domain basis, $k^2$ represents a sequence number of the frequency domain eigenbasis, $f = 0, 1, ...,$ or $M_v - 1$, and $k^2 = 0, 1, ...,$ or $K_f -$

In this embodiment of this application, when a spatial domain eigenbasis and a frequency domain eigenbasis are reported, the spatial domain eigenbasis and the frequency domain eigenbasis are decomposed based on a spatial domain basis and a frequency domain basis; the spatial domain eigenbasis and the frequency domain eigenbasis are respectively indicated by reporting weighting coefficients obtained through decomposition; and a reporting priority of the weighting coefficient is associated with a sequence number of the spatial domain basis, a sequence number of the frequency domain basis, a sequence number of the spatial domain eigenbasis, and a sequence number of the frequency domain eigenbasis. An effective manner of indicating the spatial domain eigenbasis and the frequency domain eigenbasis is provided.

In a possible design, a coefficient with a larger amplitude has a higher reporting priority.

In a possible design, the first indication information includes at least J information bit groups in N information bit groups, where N is a positive integer, and J is a positive integer less than or equal to N; and

an $n^{th}$ information bit group in the N information bit groups includes information bits of non-zero first weighting coefficients corresponding to $K_{sn}$ spatial domain eigenbases and information bits of non-zero second weighting coefficients corresponding to $K_{fn}$ spatial domain eigenbases, where $\sum_{n=1}^{N} K_{sn} = K_s$, and $\sum_{n=1}^{N} K_{fn} = K_f$; or

an $n^{th}$ information bit group in the N information bit groups includes information bits of non-zero first weighting coefficients corresponding to $l_n$ spatial domain bases and information bits of non-zero second weighting coefficients corresponding to $m_n$ spatial domain eigenbases, where $\sum_{n=1}^{N} l_n = 2L'$, and $\sum_{n=1}^{N} m_n = M_v'$; or

an $n^{th}$ information bit group in the N information bit groups includes information bits of $N_{sn}$ non-zero first weighting coefficients and information bits of $N_{fn}$ non-zero second weighting coefficients, where $\sum_{n=1}^{N} N_{sn} = N_s$, and $\sum_{n=1}^{N} N_{fn} = N_f$; $\sum_{n=1}^{N} N_{sn} = N_s - K_s$, and $\sum_{n=1}^{N} N_{fn} = N_f - K_f$; $N_s$ represents a total quantity of non-zero weighting coefficients included in the first weighting coefficient matrix; and $N_f$ represents a total quantity of non-zero weighting coefficients included in the second weighting coefficient matrix.

In a possible design, when n=1, 2, ..., or N-1, $K_{sn} = \lceil K_s/N \rceil$, and $K_{fn} = \lceil K_f/N \rceil$, or when n=N, $K_{sn} = K_s - (N-1)\lceil K_s/N \rceil$, and $K_{fn} = K_f - (N-1)\lceil K_f/N \rceil$; or

when n=1, 2, ..., or N-1, $l_n = \lceil 2L'/N \rceil$, and $m_n = \lceil M_v/N \rceil$, or when n=N, $l_n = 2L' - (N-1)\lceil 2L'/N \rceil$, and $m_n = M_v' - (N-1)\lceil M_v'/N \rceil$; or

when n=1, 2, ..., or N-1, $N_{sn} = \lceil N_s/N \rceil$, and $N_{fn} = \lceil N_f/N \rceil$, or when n=N,

$$N_{sn} = N_s - (N-1)[N_s/N], \text{ and } N_{fn} = N_f - (N-1)[N_f/N].$$

In a possible design, each of the N information bit groups includes one spatial domain information bit group and one frequency domain information bit group, and a reporting priority of the spatial domain information bit group in each information bit group is higher than a reporting priority of the frequency domain information bit group in the information bit group, or a reporting priority of the frequency domain information bit group in each information bit group is higher than a reporting priority of the spatial domain information bit group in each information bit group; and

an $n^{th}$ spatial domain information bit group includes the information bits of the non-zero first weighting coefficients corresponding to the $K_{sn}$ spatial domain eigenbases, and an $n^{th}$ frequency domain information bit group includes information bits of non-zero second weighting coefficients corresponding to $K_{fn}$ frequency domain eigenbases; or an $n^{th}$ spatial domain information bit group includes the information bits of the non-zero first weighting coefficients corresponding to the $l_n$ spatial domain bases, and an $n^{th}$ frequency domain information bit group includes the information bits of the non-zero second weighting coefficients corresponding to the $m_n$ spatial domain eigenbases; or an $n^{th}$ spatial domain information bit group includes the information bits of the $N_{sn}$ non-zero first weighting coefficients, and an $n^{th}$ frequency domain information bit group includes the information bits of the $N_{fn}$ non-zero second weighting coefficients.

In the foregoing design, a grouping manner is used for reporting, and a related coefficient in spatial domain and a related coefficient in frequency domain are separately reported in groups. When reporting resources are insufficient, a subsequent group (that is, a group with a lower priority) may be discarded, to improve reporting precision.
In a possible design, sending the first indication information to the access network device includes:

when a quantity of reporting resources of the terminal device is greater than or equal to a quantity of resources of the N information bit groups, sending the N information bit groups to the access network device; or
when a quantity of reporting resources of the terminal device is less than a quantity of resources of the N information bit groups, sending a $1^{st}$ information bit group to a $J^{th}$ information bit group in the N information bit groups to the access network device based on the quantity of reporting resources; or
when a quantity of reporting resources of the terminal device is less than a quantity of resources of the N information bit groups, sending a $1^{st}$ information bit group to a $J^{th}$ information bit group and a part of information bits in a $(J+1)^{th}$ information bit group to the access network device based on the quantity of reporting resources.

In the foregoing design, a grouping manner is used for reporting. When reporting resources are insufficient, a subsequent group (that is, a group with a lower priority) may be discarded, to improve reporting precision and further improve system performance.
In a possible design, the reporting priorities of the plurality of non-zero first weighting coefficients included in the first weighting coefficient matrix satisfy:

$$Pri_s(i, k^1) = 2L'k^1 + i;$$

or

$$Pri_s(i, k^1) = K_s i + k^1,$$

where
i represents a sequence number of the selected spatial domain basis, $k^1$ represents a sequence number of the spatial domain eigenbasis, $i = 0, 1, ...,$ or $2L' - 1$, $k^1 = 0, 1, ...,$ or $K_s - 1$, and $Pri_s(i, k^1)$ represents a priority of a non-zero first weighting coefficient associated with the spatial domain basis with the sequence number i and the spatial domain eigenbasis with the sequence number k.
In the foregoing design, a value of $Pri_s(i, k^1)$ indicates a value of the priority, that is, a larger value of the priority indicates a higher priority.
In a possible design, the reporting priorities of the plurality of non-zero second weighting coefficients included in the second weighting coefficient matrix satisfy:

$$Pri_f(f, k^2) = M_v'k^2 + \pi'(f);$$

or

$$Pri_f(f, k^2) = K_f \pi'(f) + k^2;$$

or

$$Pri_f(f, k^2) = M_v' k^2 + f;$$

or

$$Pri_f(f, k^2) = K_f f + k^2,$$

where

$$\pi'(f) = min\ (2 \cdot n_3^{(f)}, 2 \cdot \left(N_3 - n_3^{(f)}\right) - 1),$$

$f$ represents a sequence number of the selected frequency domain basis, $k^2$ represents a sequence number of the frequency domain eigenbasis, $f = 0, 1, ..., $ or $M_v$ - 1, $k^2 = 0, 1, ..., $ or $K_f$ - 1, $Pri_f(f, k^2)$ represents a priority of a non-zero second weighting coefficient associated with the frequency domain basis with the sequence number $f$ and the frequency domain eigenbasis with the sequence number $k^2$, $N_3$ represents a total quantity of frequency domain bases, and $n_3^{(f)}$ represents a sequence number of the frequency domain basis with the sequence number $f$ in the $N_3$ frequency domain bases.

In the foregoing design, a value of $Pri_f(f, k^2)$ indicates a value of the priority, that is, a larger value of the priority indicates a higher priority.

In a possible design, the method further includes:

sending second indication information to the access network device, where the second indication information includes a first bitmap and a second bitmap, where
the first bitmap indicates locations of the plurality of non-zero first weighting coefficients in the first weighting coefficient matrix, and the second bitmap indicates locations of the plurality of non-zero second weighting coefficients in the second weighting coefficient matrix.

In the foregoing design, only a non-zero weighting coefficient is reported, and a bitmap represents a location of the reported non-zero weighting coefficient in a weighting coefficient matrix, to obtain the weighting coefficient matrix.

In a possible design, a non-zero weighting coefficient that is not reported when resources are insufficient may not be reflected in a bitmap, or may be indicated currently.

In a possible design, the first indication information includes information bits of a plurality of non-zero first weighting coefficients other than maximum non-zero first weighting coefficients respectively corresponding to the $K_s$ spatial domain eigenbases in the first weighting coefficient matrix, and information bits of a plurality of non-zero second weighting coefficients other than maximum non-zero second weighting coefficients respectively corresponding to the $K_f$ frequency domain eigenbases in the second weighting coefficient matrix;

an information bit of a non-zero first weighting coefficient corresponding to a first spatial domain eigenbasis in the first weighting coefficient matrix is obtained by normalizing, based on a maximum non-zero first weighting coefficient corresponding to the first spatial domain eigenbasis, a plurality of non-zero first weighting coefficients corresponding to the first spatial domain eigenbasis, and the first spatial domain eigenbasis is any one of the $K_s$ spatial domain eigenbases; and
an information bit of a non-zero second weighting coefficient corresponding to a first frequency domain eigenbasis in the second weighting coefficient matrix is obtained by normalizing, based on a maximum non-zero second weighting coefficient corresponding to the first frequency domain eigenbasis, a plurality of non-zero second weighting coefficients corresponding to the first frequency domain eigenbasis, and the first frequency domain eigenbasis is any one of the $K_f$ frequency domain eigenbases.

In the foregoing design, a weighting coefficient is normalized before being reported, and a maximum non-zero weighting coefficient of a spatial domain/frequency domain eigenbasis that is used for reference in normalization processing is no longer reported, so that reporting overheads can be further reduced.

In a possible design, sending the first indication information to the access network device includes:

periodically sending the first indication information to the access network device based on a first reporting period; and the method further includes:

periodically sending third indication information to the access network device based on a second reporting period, where the third indication information indicates a third weighting coefficient matrix, where a weighted sum of the third weighting coefficient matrix, the $K_s$ spatial domain eigenbases, and the $K_f$ frequency domain eigenbases is used to determine a precoding matrix; and the first reporting period is longer than the second reporting period.

In some embodiments, that the weighted sum of the third weighting coefficient matrix, the $K_s$ spatial domain eigenbases, and the $K_f$ frequency domain eigenbases is used to determine the precoding matrix may be that the weighted sum of the third weighting coefficient matrix, the $K_s$ spatial domain eigenbases, and the $K_f$ frequency domain eigenbases is used to determine a channel matrix H.

According to a second aspect, an embodiment of this application provides a basis feedback method, including:

receiving a reference signal from an access network device, where the reference signal indicates a terminal device to feed back a used space-frequency eigenbasis; and sending fourth indication information to the access network device, where the fourth indication information indicates a fourth weighting coefficient matrix, where a weighted sum of the fourth weighting coefficient matrix and $G_{sf}$ space-frequency bases is used to determine $K_{sf}$ space-frequency eigenbases, and reporting priorities of a plurality of non-zero fourth weighting coefficients included in the fourth weighting coefficient matrix are related to sequence numbers of space-frequency bases associated with the non-zero fourth weighting coefficients and sequence numbers of space-frequency eigenbases associated with the non-zero fourth weighting coefficients.

In this application, a difference between a spatial domain basis and a space-frequency eigenbasis lies in that the space-frequency basis may be a DFT vector, a conjugate transpose vector of a DFT vector, or an over-sampled DFT vector.

For example, the fourth weighting coefficient matrix may be understood as being obtained by decomposing each of the $K_{sf}$ space-frequency eigenbases based on the $G_{sf}$ space-frequency bases.

For example, the fourth weighting coefficient matrix includes $G_{sf}K_{sf}$ fourth weighting coefficients, each of the $G_{sf}K_{sf}$ fourth weighting coefficients is associated with one of the $K_{sf}$ space-frequency eigenbases and one of the $G_{sf}$ space-frequency bases, the fourth weighting coefficient may be represented as $C_{sf}(i, f, k^3)$, $i$ represents a sequence number of a spatial domain basis corresponding to the selected space-frequency basis, $f$ represents a sequence number of a frequency domain basis corresponding to the selected space-frequency basis, $k^3$ represents a sequence number of the space-frequency eigenbasis, $i = 0,1, ...,$ or $2L'' - 1$, $f = 0, 1, ...,$ or $M_v''$ $k^3 = 0,1, ...,$ or $K_{sf} - 1$.

In this embodiment of this application, when a space-frequency eigenbasis is reported, the space-frequency eigenbasis is decomposed based on a space-frequency basis, the space-frequency eigenbasis is indicated by reporting a weighting coefficient obtained through decomposition, and a reporting priority of the weighting coefficient is associated with a sequence number of the space-frequency basis and a sequence number of the space-frequency eigenbasis. An effective manner of indicating the space-frequency eigenbasis is provided.

In a possible design, a coefficient with a larger amplitude has a higher reporting priority.

In a possible design, the fourth indication information includes at least J information bit groups in N information bit groups, where N is a positive integer, and J is a positive integer less than or equal to N; and

an $n^{th}$ information bit group in the N information bit groups includes information bits of non-zero fourth weighting coefficients corresponding to $K_{sfn}$ space-frequency eigenbases, where $\sum_{n=1}^{N} K_{sfn} = K_{sf}$ ; or an $n^{th}$ information bit group in the N information bit groups includes information bits of $N_{sfn}$ non-zero fourth weighting coefficients, where $\sum_{n=1}^{N} N_{sfn} = N_{sf}$ , and $N_{sf}$ represents a total quantity of non-zero fourth weighting coefficients included in the fourth weighting coefficient matrix.

In a possible design, when n=1, 2, ..., or N-1, $K_{sfn} = \lceil K_{sf}/N \rceil$, or when n=N, $K_{sfn} = K_{sf} - (N-1)\lceil K_{sf}/N \rceil$; or

when n=1, 2, ..., or N-1, $N_{sfn} = \lceil N_{sf}/N \rceil$, or when n=N, $N_{sfn} = N_{sfn} - (N-1)\lceil N_{sf}/N \rceil$.

In a possible design, sending the fourth indication information to the access network device includes:

when a quantity of reporting resources of the terminal device is greater than or equal to a quantity of resources of the N information bit groups, sending the N information bit groups to the access network device; or

when a quantity of reporting resources of the terminal device is less than a quantity of resources of the N information bit groups, sending a 1st information bit group to a Jth information bit group in the N information bit groups to the access network device based on the quantity of reporting resources; or

when a quantity of reporting resources of the terminal device is less than a quantity of resources of the N information bit groups, sending a 1st information bit group to a Jth information bit group and a part of information bits in a (J+1)th information bit group to the access network device based on the quantity of reporting resources.

In a possible design, sending the fourth indication information to the access network device includes:

when a quantity of reporting resources of the terminal device is less than a quantity of resources of information bits of the non-zero fourth weighting coefficients in the fourth weighting coefficient matrix, sending information bits of a part of the non-zero fourth weighting coefficients in the fourth weighting coefficient matrix to the access network device based on the quantity of reporting resources, where a quantity of resources of the information bits of the part of the non-zero fourth weighting coefficients satisfies the quantity of reporting resources of the terminal device, and reporting priorities of the part of the non-zero fourth weighting coefficients are all higher than a reporting priority of a non-zero fourth weighting coefficient other than the part of the non-zero fourth weighting coefficients in the fourth weighting coefficient matrix; or

when a quantity of reporting resources of the terminal device is less than a quantity of resources of information bits of the non-zero fourth weighting coefficients in the fourth weighting coefficient matrix, sending, to the access network device based on the quantity of reporting resources, information bits of non-zero fourth weighting coefficients corresponding to a part of the space-frequency eigenbases in the fourth weighting coefficient matrix, where the part of the space-frequency eigenbases are space-frequency eigenbases whose sequence numbers are less than g in the $K_{sfn}$ space-frequency eigenbases.

In a possible design, the reporting priorities of the plurality of non-zero fourth weighting coefficients included in the fourth weighting coefficient matrix satisfy:

$$Pri_{sf}(i, f, k^3) = 2L''k^3\pi'(f) + 2L''k + i;$$

or

$$Pri(i, f, k^3) = 2L''N_3k^3 + 2L''\pi'(f) + i,$$

where

$$\pi'(f) = min\left(2 \cdot n_3^{(f)}, 2 \cdot \left(N_3 - n_3^{(f)}\right) - 1\right),$$

the $G_{sf}$ space-frequency bases are a part or all of $2L''M_v''$ space-frequency bases generated by using $2L''$ spatial domain bases and $M_v''$ frequency domain bases, i represents a sequence number of a spatial domain basis corresponding to the selected space-frequency basis, f represents a sequence number of a frequency domain basis corresponding to the selected space-frequency basis, $k^3$ represents a sequence number of the space-frequency eigenbasis, i = 0, 1, ..., or $2L''$-1, f = 0, 1, ..., or $M_v''$ -, $k^3 = 0, 1, ..., or K_{sf}$ -, Pri(i, f, $k^3$) represents a priority of a non-zero fourth weighting coefficient associated with the frequency domain basis with the sequence number f, the space-frequency eigenbasis with the

sequence number $k_3$, and the spatial domain basis with the sequence number i, $N_3$ represents a total quantity of frequency domain bases, and $n_3^{(f)}$ represents a sequence number of the frequency domain basis with the sequence number $f$ in the $N_3$ frequency domain bases.

In a possible design, sending the fourth indication information to the access network device includes:

periodically sending the fourth indication information to the access network device based on a first reporting period; and

the method further includes:

periodically sending fifth indication information to the access network device based on a second reporting period, where the fifth indication information indicates a fifth weighting coefficient matrix, where

a weighted sum of the fifth weighting coefficient matrix and the $K_{sf}$ space-frequency eigenbases is used to determine a precoding matrix; and

the first reporting period is longer than the second reporting period.

According to a third aspect, an embodiment of this application provides a basis feedback method, including:

sending a reference signal to a terminal device, where the reference signal indicates the terminal device to feed back a used spatial domain eigenbasis and a used frequency domain eigenbasis; and

receiving first indication information from the terminal device, where the first indication information indicates a first weighting coefficient matrix and a second weighting coefficient matrix, where

a weighted sum of the first weighting coefficient matrix and 2L' spatial domain bases in a spatial domain basis set is used to determine $K_s$ spatial domain eigenbases, and a weighted sum of the second weighting coefficient matrix and $M_v$' frequency domain bases in a frequency domain basis set is used to determine $K_f$ frequency domain eigenbases; and

reporting priorities of a plurality of non-zero first weighting coefficients in the first weighting coefficient matrix are related to sequence numbers of spatial domain bases associated with the non-zero first weighting coefficients and sequence numbers of spatial domain eigenbases associated with the non-zero first weighting coefficients, and reporting priorities of a plurality of non-zero second weighting coefficients in the second weighting coefficient matrix are related to sequence numbers of frequency domain bases associated with the non-zero second weighting coefficients and sequence numbers of frequency domain eigenbases associated with the non-zero second weighting coefficients.

In a possible design, the first indication information includes at least J information bit groups in N information bit groups, where N is a positive integer, and J is a positive integer less than or equal to N; and

an $n^{th}$ information bit group in the N information bit groups includes information bits of non-zero first weighting coefficients corresponding to $K_{sn}$ spatial domain eigenbases and information bits of non-zero second weighting coefficients corresponding to $K_{fn}$ spatial domain eigenbases, where $\sum_{n=1}^{N} K_{sn} = K_s$, and $\sum_{n=1}^{N} K_{fn} = K_f$; or

an $n^{th}$ information bit group in the N information bit groups includes information bits of non-zero first weighting coefficients corresponding to $l_n$ spatial domain bases and information bits of non-zero second weighting coefficients corresponding to $m_n$ spatial domain eigenbases, where $\sum_{n=1}^{N} l_n = 2L'$, and $\sum_{n=1}^{N} m_n = M_v'$; or

an $n^{th}$ information bit group in the N information bit groups includes information bits of $N_{sn}$ non-zero first weighting coefficients and information bits of $N_{fn}$ non-zero second weighting coefficients, where $\sum_{n=1}^{N} N_{sn} = N_s$, and $\sum_{n=1}^{N} N_{fn} = N_f$; or $\sum_{n=1}^{N} N_{sn} = N_s - K_s$, and $\sum_{n=1}^{N} N_{fn} = N_f - K_f$; $N_s$ represents a total quantity of non-zero weighting coefficients included in the first weighting coefficient matrix; and $N_f$ represents a total quantity of non-zero weighting coefficients included in the second weighting coefficient matrix.

In a possible design, when n=1, 2, ..., or N-1, $K_{sn} = \lceil K_s/N \rceil$, and $K_{fn} = \lceil K_f/N \rceil$, or when n=N,

$$K_{sn} = K_s - (N-1)\lceil K_s/N \rceil \text{, and } K_{fn} = K_f - (N-1)\lceil K_f/N \rceil \text{; or}$$

when n=1, 2, ..., or N-1, $l_n = \lceil 2L'/N \rceil$, and $m_n = \lceil M_v/N \rceil$, or when n=N,

$$l_n = 2L' - (N-1)\lceil 2L'/N \rceil \text{, and } m_n = M_v' - (N-1)\lceil M_v'/N \rceil \text{; or}$$

when n=1, 2, ..., or N-1, $N_{sn} = \lceil N_s/N \rceil$, and $N_{fn} = \lceil N_f/N \rceil$, or when n=N,

$$N_{sn} = N_s - (N-1)\lceil N_s/N \rceil \text{, and } N_{fn} = N_f - (N-1)\lceil N_f/N \rceil.$$

In a possible design, each of the N information bit groups includes one spatial domain information bit group and one frequency domain information bit group, and a reporting priority of the spatial domain information bit group in each information bit group is higher than a reporting priority of the frequency domain information bit group in the information bit group, or a reporting priority of the frequency domain information bit group in each information bit group is higher than a reporting priority of the spatial domain information bit group in each information bit group; and

an $n^{th}$ spatial domain information bit group includes the information bits of the non-zero first weighting coefficients corresponding to the $K_{sn}$ spatial domain eigenbases, and an $n^{th}$ frequency domain information bit group includes information bits of non-zero second weighting coefficients corresponding to $K_{fn}$ frequency domain eigenbases; or an $n^{th}$ spatial domain information bit group includes the information bits of the non-zero first weighting coefficients corresponding to the $l_n$ spatial domain bases, and an $n^{th}$ frequency domain information bit group includes the information bits of the non-zero second weighting coefficients corresponding to the $m_n$ spatial domain eigenbases; or an $n^{th}$ spatial domain information bit group includes the information bits of the $N_{sn}$ non-zero first weighting coefficients, and an $n^{th}$ frequency domain information bit group includes the information bits of the $N_{fn}$ non-zero second weighting coefficients.

In a possible design, receiving the first indication information from the terminal device includes:

when a quantity of reporting resources of the terminal device is greater than or equal to a quantity of resources of the N information bit groups, receiving the N information bit groups from the terminal device; or
when a quantity of reporting resources of the terminal device is less than a quantity of resources of the N information bit groups, receiving a $1^{st}$ information bit group to a $J^{th}$ information bit group in the N information bit groups from the terminal device; or
when a quantity of reporting resources of the terminal device is less than a quantity of resources of the N information bit groups, receiving a $1^{st}$ information bit group to a $J^{th}$ information bit group and a part of information bits in a $(J+1)^{th}$ information bit group from the terminal device.

In a possible design, the reporting priorities of the plurality of non-zero first weighting coefficients included in the first weighting coefficient matrix satisfy:

$$Pri_s(i, k^1) = 2L'k^1 + i;$$

or

$$Pri_s(i, k^1) = K_s i + k^1,$$

where
i represents a sequence number of the selected spatial domain basis, $k^1$ represents a sequence number of the spatial domain eigenbasis, $i = 0,1, ...,$ or $2L'-1$, $k^1 = 0,1, ...,$ or $K_s-1$, and $Pri_s(i, k^1)$ represents a priority of a non-zero first weighting coefficient associated with the spatial domain basis with the sequence number i and the spatial domain eigenbasis with the sequence number k.

In the foregoing design, a value of $Pri_s(i, k^1)$ indicates a value of the priority, that is, a larger value of the priority indicates a higher priority.

In a possible design, the reporting priorities of the plurality of non-zero second weighting coefficients included in the second weighting coefficient matrix satisfy:

$$Pri_f(f, k^2) = M_v'k^2 + \pi'(f);$$

or

$$Pri_f(f, k^2) = K_f\pi'(f) + k^2;$$

or

$$Pri_f(f, k^2) = M_v'k^2 + f;$$

or

$$Pri_f(f, k^2) = K_f f + k^2,$$

where

$$\pi'(f) = min\left(2 \cdot n_3^{(f)}, 2 \cdot \left(N_3 - n_3^{(f)}\right) - 1\right),$$

f represents a sequence number of the selected frequency domain basis, $k^2$ represents a sequence number of the frequency domain eigenbasis, $f = 0, 1, ...,$ or $M_v$ - 1, $k^2 = 0, 1, ...,$ or $K_f$ - 1, $Pri_f(f, k^2)$ represents a priority of a non-zero second weighting coefficient associated with the frequency domain basis with the sequence number $f$ and the frequency domain eigenbasis with the sequence number $k^2$, $N_3$ represents a total quantity of frequency domain bases, and $n_3^{(f)}$ represents a sequence number of the frequency domain basis with the sequence number $f$ in the $N_3$ frequency domain bases.

In a possible design, the method further includes:

receiving second indication information from the terminal device, where the second indication information includes a first bitmap and a second bitmap, where
the first bitmap indicates locations of the plurality of non-zero first weighting coefficients in the first weighting coefficient matrix, and the second bitmap indicates locations of the plurality of non-zero second weighting coefficients in the second weighting coefficient matrix.

In a possible design, the first indication information includes information bits of a plurality of non-zero first weighting coefficients other than maximum non-zero first weighting coefficients respectively corresponding to the $K_s$ spatial domain eigenbases in the first weighting coefficient matrix, and information bits of a plurality of non-zero second weighting coefficients other than maximum non-zero second weighting coefficients respectively corresponding to the $K_f$ frequency domain eigenbases in the second weighting coefficient matrix;

an information bit of a non-zero first weighting coefficient corresponding to a first spatial domain eigenbasis in the first weighting coefficient matrix is obtained by normalizing, based on a maximum non-zero first weighting coefficient corresponding to the first spatial domain eigenbasis, a plurality of non-zero first weighting coefficients corresponding to the first spatial domain eigenbasis, and the first spatial domain eigenbasis is any one of the $K_s$ spatial domain eigenbases; and
an information bit of a non-zero second weighting coefficient corresponding to a first frequency domain eigenbasis in the second weighting coefficient matrix is obtained by normalizing, based on a maximum non-zero second weighting coefficient corresponding to the first frequency domain eigenbasis, a plurality of non-zero second weighting coefficients corresponding to the first frequency domain eigenbasis, and the first frequency domain eigenbasis is any one of the $K_f$ frequency domain eigenbases.

In a possible design, receiving the first indication information from the terminal device includes:

periodically receiving the first indication information from the terminal device based on a first reporting period; and

the method further includes:

periodically receiving third indication information from the terminal device based on a second reporting period, where the third indication information indicates a third weighting coefficient matrix, where a weighted sum of the third weighting coefficient matrix, the $K_s$ spatial domain eigenbases, and the $K_f$ frequency domain eigenbases is used to determine a precoding matrix; and the first reporting period is longer than the second reporting period.

According to a fourth aspect, an embodiment of this application provides a basis feedback method, including:

sending a reference signal to a terminal device, where the reference signal indicates the terminal device to feed back a used space-frequency eigenbasis; and receiving fourth indication information from the terminal device, where the fourth indication information indicates a fourth weighting coefficient matrix, where a weighted sum of the fourth weighting coefficient matrix and $G_{sf}$ space-frequency bases is used to determine $K_{sf}$ space-frequency eigenbases, and reporting priorities of a plurality of non-zero fourth weighting coefficients included in the fourth weighting coefficient matrix are related to sequence numbers of space-frequency bases associated with the non-zero fourth weighting coefficients and sequence numbers of space-frequency eigenbases associated with the non-zero fourth weighting coefficients.

In a possible design, the fourth indication information includes at least J information bit groups in N information bit groups, where N is a positive integer, and J is a positive integer less than or equal to N; and

an $n^{th}$ information bit group in the N information bit groups includes information bits of non-zero fourth weighting coefficients corresponding to $K_{sfn}$ space-frequency eigenbases, where $\sum_{n=1}^{N} K_{sfn} = K_{sf}$ ; or an $n^{th}$ information bit group in the N information bit groups includes information bits of $N_{sfn}$ non-zero fourth weighting coefficients, where $\sum_{n=1}^{N} N_{sfn} = N_{sf}$, and $N_{sf}$ represents a total quantity of non-zero fourth weighting coefficients included in the fourth weighting coefficient matrix.

In a possible design, when n=1, 2, ..., or N-1, $K_{sfn} = \lceil K_{sf}/N \rceil$ , or when n=N,

$$K_{sfn} = K_{sf} - (N-1)\lceil K_{sf}/N \rceil$$ ; or

when n=1, 2, ..., or N-1, $N_{sfn} = \lceil N_{sf}/N \rceil$ , or when n=N, $N_{sfn} = N_{sfn} - (N-1)\lceil N_{sf}/N \rceil$ .

In a possible design, receiving the fourth indication information from the terminal device includes:

when a quantity of reporting resources of the terminal device is greater than or equal to a quantity of resources of the N information bit groups, receiving the N information bit groups from the terminal device; or when a quantity of reporting resources of the terminal device is less than a quantity of resources of the N information bit groups, receiving a $1^{st}$ information bit group to a $J^{th}$ information bit group in the N information bit groups from the terminal device; or when a quantity of reporting resources of the terminal device is less than a quantity of resources of the N information bit groups, receiving a $1^{st}$ information bit group to a $J^{th}$ information bit group and a part of information bits in a $(J+1)^{th}$ information bit group from the terminal device.

In a possible design, receiving the fourth indication information from the terminal device includes:

when a quantity of reporting resources of the terminal device is less than a quantity of resources of information bits of the non-zero fourth weighting coefficients in the fourth weighting coefficient matrix, receiving information bits of a part of the non-zero fourth weighting coefficients in the fourth weighting coefficient matrix from the terminal device, where a quantity of resources of the information bits of the part of the non-zero fourth weighting coefficients satisfies the quantity of reporting resources of the terminal device, and reporting priorities of the part of the non-zero fourth weighting coefficients are all higher than a reporting priority of a non-zero fourth weighting coefficient other than the part of the non-zero fourth weighting coefficients in the fourth weighting coefficient matrix; or
when a quantity of reporting resources of the terminal device is less than a quantity of resources of information bits of the non-zero fourth weighting coefficients in the fourth weighting coefficient matrix, receiving information bits of non-zero fourth weighting coefficients corresponding to a part of space-frequency eigenbases in the fourth weighting coefficient matrix of the terminal device, where the part of the space-frequency eigenbases are space-frequency eigenbases whose sequence numbers are less than g in the $K_{sfn}$ space-frequency eigenbases.

In a possible design, the reporting priorities of the plurality of non-zero fourth weighting coefficients included in the fourth weighting coefficient matrix satisfy:

$$Pri_{sf}(i, f, k^3) = 2L''k^3\pi'(f) + 2L''k + i;$$

or

$$Pri(i, f, k^3) = 2L''N_3k^3 + 2L''\pi'(f) + i,$$

where

$$\pi'(f) = min\left(2 \cdot n_3^{(f)}, 2 \cdot \left(N_3 - n_3^{(f)}\right) - 1\right),$$

the $G_{sf}$ space-frequency bases are a part or all of $2L''M_v''$ space-frequency bases generated by using $2L''$ spatial domain bases and $M_v''$ frequency domain bases, i represents a sequence number of a spatial domain basis corresponding to the selected space-frequency basis, f represents a sequence number of a frequency domain basis corresponding to the selected space-frequency basis, $k^3$ represents a sequence number of the space-frequency eigenbasis, $i = 0, 1, ...,$ or $2L''-1$, $f = 0, 1, ...,$ or $M_v''-$, $k^3 = 0, 1, ...,$ or $K_{sf} - 1$, $Pri(i, f, k^3)$ represents a priority of a non-zero fourth weighting coefficient associated with the frequency domain basis with the sequence number f, the space-frequency eigenbasis with the sequence number $k^3$, and the spatial domain basis with the sequence number i, $N_3$ represents a total quantity of frequency domain bases, and $n_3^{(f)}$ represents a sequence number of the frequency domain basis with the sequence number f in the $N_3$ frequency domain bases.

In a possible design, receiving the fourth indication information from the terminal device includes:

periodically receiving the fourth indication information from the terminal device based on a first reporting period; and the method further includes:

periodically receiving fifth indication information from the terminal device based on a second reporting period, where the fifth indication information indicates a fifth weighting coefficient matrix, where
a weighted sum of the fifth weighting coefficient matrix and the $K_{sf}$ space-frequency eigenbases is used to determine a precoding matrix; and
the first reporting period is longer than the second reporting period.

According to a fifth aspect, this application further provides a communication apparatus. The apparatus is a terminal device or a chip in the terminal device. The communication apparatus has a function of implementing any method provided in the first aspect, or a function of implementing any method provided in the second aspect. The communication apparatus may be implemented by hardware, or may be implemented by executing corresponding software by hardware. The hardware or the software includes one or more units or modules corresponding to the foregoing function.

In a possible design, the communication apparatus includes a processor. The processor is configured to support the communication apparatus in performing a corresponding function of the terminal device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a service satellite, for example, data or signal receiving and sending. For example, the communication interface may be a transceiver, a circuit, a bus, a module, or another type of communication interface.

In a possible design, the communication apparatus includes corresponding functional modules respectively configured to implement steps in the foregoing method. The function may be implemented by hardware, or may be implemented by executing corresponding software by hardware. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the first aspect or the second aspect. Details are not described herein again.

According to a sixth aspect, this application further provides a communication apparatus. The apparatus is an access network device or a chip in the access network device. The communication apparatus has a function of implementing any method provided in the third aspect, or a function of implementing any method provided in the fourth aspect. The communication apparatus may be implemented by hardware, or may be implemented by executing corresponding software by hardware. The hardware or the software includes one or more units or modules corresponding to the foregoing function.

In a possible design, the communication apparatus includes a processor. The processor is configured to support the communication apparatus in performing a corresponding function of the service satellite in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal device, for example, data or signal receiving and sending. For example, the communication interface may be a transceiver, a circuit, a bus, a module, or another type of communication interface.

In a possible design, the communication apparatus includes corresponding functional modules respectively configured to implement steps in the foregoing method. The function may be implemented by hardware, or may be implemented by executing corresponding software by hardware. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the third aspect or the fourth aspect. Details are not described herein again.

According to a seventh aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the first aspect and the possible designs, or implement the method according to any one of the second aspect and the possible designs by using a logic circuit or by executing code instructions.

According to an eighth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the third aspect and the possible designs, or implement the method according to any one of the fourth aspect and the possible designs by using a logic circuit or by executing code instructions.

According to a ninth aspect, a computer-readable storage medium is provided. The computer-readable storage medium stores a computer program or instructions. When the computer program or the instructions are executed by a processor, the method according to any one of the first aspect or the second aspect and the possible designs is implemented.

According to a tenth aspect, a computer-readable storage medium is provided. The computer-readable storage medium stores a computer program or instructions. When the computer program or the instructions are executed by a processor, the method according to any one of the third aspect or the fourth aspect and the possible designs is implemented.

According to an eleventh aspect, a computer program product storing instructions is provided. When the instructions are run by a processor, the method according to any one of the first aspect, the second aspect, the third aspect, or the fourth aspect and the possible designs is implemented.

According to a twelfth aspect, a chip system is provided. The chip system includes a processor, may further include a memory, and is configured to implement the method according to any one of the first aspect, the second aspect, the third aspect, or the fourth aspect and the possible designs. The chip system may include a chip, or may include a chip and another discrete component.

According to a thirteenth aspect, a communication system is provided. The system includes the apparatus (for example, a terminal device) according to the first aspect and the apparatus (for example, an access network device) according to the third aspect; or includes the apparatus (for example, a terminal device) according to the second aspect and the apparatus (for example, an access network device) according to the fourth aspect.

For technical effects that can be achieved by the technical solutions in any one of the second aspect to the thirteenth aspect, refer to descriptions of technical effects that can be achieved by the technical solutions in the first aspect. Details are not described herein again.

BRIEF DESCRIPTION OF DRAWINGS

FIG. 1 is a diagram of an architecture of a communication system 1000 to which an embodiment of this application is applied;
FIG. 2 is a diagram of a structure of modules included in an access network device and a terminal device according to this application;
FIG. 3 is a schematic flowchart of a basis feedback method according to an embodiment of this application;
FIG. 4 is a diagram of reporting rankings of information bit groups according to an embodiment of this application;
FIG. 5 is another diagram of reporting rankings of information bit groups according to an embodiment of this application;
FIG. 6 is a schematic flowchart of another basis feedback method according to an embodiment of this application;
FIG. 7 is a diagram of a structure of a communication apparatus according to an embodiment of this application; and
FIG. 8 is a diagram of a structure of a communication apparatus according to an embodiment of this application.

DESCRIPTION OF EMBODIMENTS

To make objectives, technical solution, and advantages of embodiments of this application clearer, the following further describes embodiments of this application in detail with reference to the accompanying drawings.

"At least one of the following (items)" in embodiments of this application indicates "one or more (items)". "A plurality of (items)" means "two or more (items)". The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that, although terms such as first and second may be used in embodiments of this application to describe objects, these objects should not be limited by these terms. The terms are merely used to distinguish the objects from each other.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" represents giving an example, an illustration, or a description. Any method or design solution described as an "example" or "for example" in embodiments of this application should not be explained as being more preferred or having more advantages than another method or design solution. Exactly, use of the terms such as "example" or "for example" is intended to present a relative concept in a specific manner.

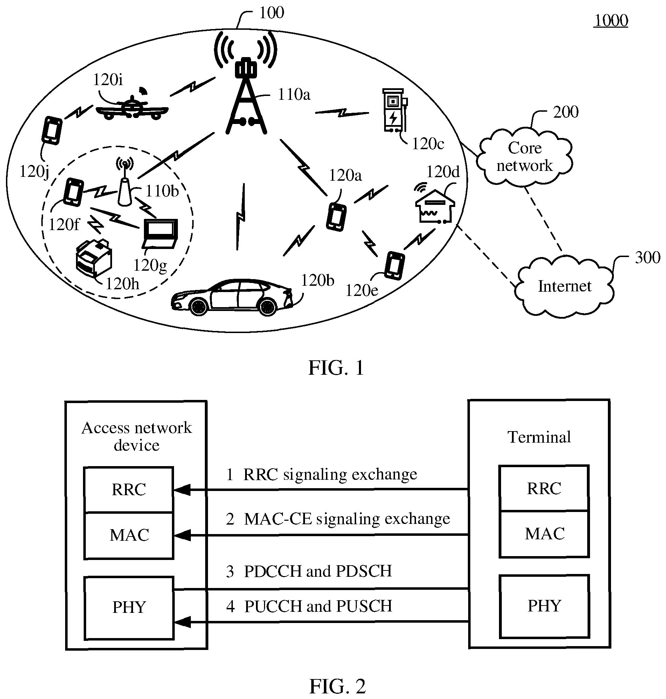

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to a core network in a wireless or wired manner. A core network device and the radio access network device may be different independent physical devices, or functions of the core network device and logical functions of the radio access network device may be integrated into a same physical device, or a part of functions of the core network device and a part of functions of the radio access network device may be integrated into one physical device. Terminal devices may be connected to each other in a wired or wireless manner, and radio access network devices may be connected to each other in a wired or wireless manner. FIG. 1 is merely an example diagram. The communication system may further include other network devices, for example, may further include a wireless relay device and a wireless backhaul device, which are not shown in FIG. 1.

The radio access network device is an access device used by the terminal device to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, or the like; or may be a module or a unit that completes a part of functions of a base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the network device is short for the radio access network device.

The terminal device is a device having a wireless transceiver function, and may send a signal to the access network device, or receive a signal from the access network device. The terminal device may also be referred to as a terminal, user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, a vehicle-mounted terminal, an airplane, a ship, a robot, a robotic arm, a smart home device, or the like. A specific technology and a specific device form that are used by the terminal device are not limited in embodiments of this application.

The access network device and the terminal device may be at fixed locations, or may be movable. The access network device and the terminal device may be deployed on land, including an indoor or outdoor device, a handheld device, or a vehicle-mounted device; or may be deployed on a water surface; or may be deployed on a plane, a balloon, or an artificial satellite. Application scenarios of the access network device and the terminal device are not limited in embodiments of this application.

Roles of the access network device and the terminal device may be relative. For example, a helicopter or an uncrewed aerial vehicle 120i in FIG. 1 may be configured as a mobile access network device. For the terminal device 120j that accesses the radio access network 100 via 120i, the terminal device 120i is an access network device. However, for the access network device 110a, 120i is a terminal device, that is, 110a and 120i communicate with each other by using a radio air interface protocol. Certainly, 110a and 120i may alternatively communicate with each other by using an interface protocol between access network devices. In this case, for 110a, 120i is also an access network device. Therefore, both the access network device and the terminal device may be collectively referred to as communication apparatuses. 110a and 110b in FIG. 1 may be referred to as communication apparatuses having a function of the access network device, and 120a to 120j in FIG. 1 may be referred to as communication apparatuses having a function of the terminal device.

Communication between an access network device and a terminal device, between access network devices, or between terminal devices may be performed by using a licensed spectrum, an unlicensed spectrum, or both a licensed spectrum and an unlicensed spectrum, and may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, the function of the access network device may be performed by a module (for example, a chip) in the access network device, or may be performed by a control subsystem including the function of the access network device. The control subsystem including the function of the access network device herein may be a control center in the foregoing application scenarios such as the smart grid, the industrial control, the smart transportation, and the smart city. The function of the terminal device may be performed by a module (for example, a chip or a modem) in the terminal device, or may be performed by an apparatus including the function of the terminal device. In this application, the access network device sends a downlink signal or downlink information to the terminal device, where the downlink information is carried on a downlink channel. The terminal device sends an uplink signal or uplink information to the access network device, where the uplink information is carried on an uplink channel. To communicate with the access network device, the terminal device needs to establish a wireless connection to a cell controlled by the access network device. The cell that establishes the wireless connection to the terminal device is referred to as a serving cell of the terminal device. When communicating with the serving cell, the terminal device may be further interfered with by a signal from a neighboring cell.

FIG. 2 is a diagram of a structure of modules included in an access network device and a terminal device according to this application. A radio resource control (radio resource control, RRC) signaling exchange module is a module used by the access network device and the terminal device to send and receive RRC signaling. A medium access control (medium access control, MAC) signaling exchange module is a module used by the access network device and the terminal device to send and receive medium access control-control element (MAC control element, MAC-CE) signaling. A physical layer (Physical Layer, PHY) signaling and data exchange module is a module used by the access network device and the terminal device to send and receive uplink/downlink control signaling and uplink/downlink data.

It may be understood that, in embodiments of this application, a physical downlink shared channel (physical downlink shared channel, PDSCH), a physical downlink control channel (physical downlink control channel, PDCCH), a physical uplink control channel (physical uplink control channel, PUCCH), and a physical uplink shared channel (physical uplink shared channel, PUSCH) are merely used as examples of a downlink data channel, a downlink control channel, an uplink control channel, and an uplink data channel respectively. In different systems and different scenarios, the data channel and the control channel may have different names. This is not limited in embodiments of this application.

For ease of understanding of embodiments of this application, several basic concepts in embodiments of this application are briefly described.

(1) A precoding matrix indicator (PMI) may indicate a precoding matrix. The precoding matrix may be, for example, a precoding matrix determined by the terminal device based on a channel matrix of each frequency domain unit. The channel matrix may be determined by the terminal device through channel estimation or in another manner or based on channel reciprocity. However, it should be understood that a specific method of determining the precoding matrix by the terminal device is not limited to the foregoing descriptions. For specific implementations, refer to a conventional technology. For brevity, examples are not described one by one herein.

For example, the precoding matrix may be obtained by performing singular value decomposition (singular value decomposition, SVD) on a channel matrix or a covariance matrix of the channel matrix, or may be obtained by performing eigenvalue decomposition (eigenvalue decomposition, EVD) on the covariance matrix of the channel matrix. It should be understood that the foregoing listed manners of determining the precoding matrix are merely examples, and should not constitute any limitation on this application. For a manner of determining the precoding matrix, refer to the conventional technology. For brevity, examples are not described one by one herein.

The precoding matrix determined by the terminal device may be referred to as a to-be-fed precoding matrix, or a to-be-reported precoding matrix. The terminal device may indicate the to-be-fed-back precoding matrix by using the PMI, so that the access network device restores the precoding matrix based on the PMI. The precoding matrix restored by the access network device based on the PMI may be the same as or similar to the to-be-fed-back precoding matrix.

It should be understood that the PMI is merely a name, and should not constitute any limitation on this application. This application does not preclude a possibility of defining signaling with other names for same or similar functions in a future protocol.

(2) A frequency domain unit is a unit of a frequency domain resource, and may represent different frequency domain resource granularities. The frequency domain unit may include, for example, but is not limited to, a resource block (resource block, RB) or a subband (subband).

(3) A spatial domain basis may also be referred to as a spatial domain vector (spatial domain vector), or referred to as a beam (beam) vector, a spatial domain beam basis vector, a spatial domain basis vector, a spatial domain beam, or the like. Each element in the spatial domain vector may represent a weighting coefficient of each antenna port (antenna port). Signals of antenna ports represented by using elements in the spatial domain basis are linearly superposed based on weighting coefficients of the antenna ports, so that an area with a strong signal can be formed in a specific direction in space.

The antenna port may also be referred to as a port for short. The antenna port may be understood as a transmit antenna that can be identified by a receiving device, or a transmit antenna that can be spatially distinguished. One antenna port may be preconfigured for each virtual antenna, each virtual antenna may be a weighted combination of a plurality of physical antennas, and each antenna port may correspond to one reference signal. Therefore, each antenna port may be referred to as a reference signal port, for example, a CSI-RS port or a sounding reference signal (sounding reference signal, SRS) port.

The reference signal may be a reference signal that is not precoded, or may be a precoded reference signal. This is not limited in this application.

The spatial domain basis may be a discrete Fourier transform (Discrete Fourier Transform, DFT) vector. The DFT vector may be a vector in a DFT matrix. Alternatively, the spatial domain basis is a conjugate transpose vector of the DFT vector. The DFT conjugate transpose vector may be a column vector in a conjugate transpose matrix of the DFT matrix. Alternatively, the spatial domain basis is an over-sampled DFT vector. The over-sampled DFT vector may be a vector in an over-sampled DFT matrix.

(4) A spatial domain basis set is also referred to as a spatial domain vector set, a beam vector set, a spatial domain beam basis vector set, a spatial domain basis vector set, or the like. A plurality of spatial domain vectors with different lengths may be included to correspond to different quantities of antenna ports. In embodiments of this application, a spatial domain basis used to construct a precoding vector (or a precoding matrix) may be determined from a spatial domain basis set. In other words, the spatial domain basis set includes a plurality of candidate spatial domain vectors that can be used to construct the precoding vector.

(5) A frequency domain basis may also be referred to as a frequency domain vector (frequency domain vector), a frequency domain basis vector, a delay domain vector, or a delay domain basis vector. The frequency domain basis is a vector that may represent a change rule of a channel in frequency domain. Each frequency domain basis may represent one change rule. When a signal is transmitted through a radio channel, the signal may arrive at a receive antenna through a plurality of paths from a transmit antenna. Frequency selective fading caused by a multipath delay is a change of a frequency domain channel. Therefore, change rules, caused by delays on different transmission paths, of channels in frequency domain may be represented by using different frequency domain bases. For example, the frequency domain basis is a DFT vector. The DFT vector may be a column vector in a DFT matrix. The frequency domain basis may also be a conjugate transpose vector of the DFT vector. The DFT conjugate transpose vector may be a column vector in a conjugate transpose matrix of the DFT matrix.

A length of the frequency domain basis may be determined based on a quantity of to-be-reported frequency domain units that is preconfigured in a reporting bandwidth, may be determined based on a length of the reporting bandwidth, or may be a value predefined in a protocol. The length of the frequency domain basis is not limited in this application. The reporting bandwidth may be a CSI reporting bandwidth (CSI-ReportingBand) carried in a CSI reporting configuration in higher layer signaling (for example, a radio resource control (radio resource control, RRC) message).

(6) A frequency domain basis set is also referred to as a frequency domain basis vector set, and may include a plurality of frequency domain bases with different lengths. In embodiments of this application, a frequency domain basis used to construct a precoding vector may be determined from the frequency domain basis set. In other words, the frequency domain basis set includes a plurality of candidate frequency domain bases that can be used to construct the precoding vector.

(7) A space-frequency basis may also be referred to as a space-frequency joint vector, a space-frequency vector, or the like, is a vector representing a change rule of a channel in space-frequency domain, and may be determined by using one spatial domain basis and one frequency domain basis. The space-frequency basis may be determined through separate compression in spatial domain and frequency domain, or may be determined through joint compression in spatial domain and frequency domain. For details, refer to the following term descriptions (8) and (9). A relationship between the space-frequency basis and the following two parameters, namely, a spatial domain basis and a frequency domain basis, is described below with reference to a compression manner.

(8) Separate compression in spatial domain and frequency domain means that a channel parameter is quantized separately by using a correlation of a channel in spatial domain and a correlation of the channel in frequency domain, and a quantity of weighting coefficients that need to be reported when the terminal device reports downlink CSI is reduced, to implement compression and reporting of a precoding matrix. Optionally, a channel matrix may also be compressed and reported in this manner.

For example, if a transmit antenna of the access network device is a dual-polarized antenna, a quantity of rows in the precoding matrix H is 2M (where M is a quantity of transmit antenna ports in one polarization direction). If the access network device has a single-polarized antenna, a quantity of rows of the precoding matrix H is M. The dual-polarized antenna is used as an example herein. However, during actual application, a polarization type of an antenna is not limited. For the single-polarized antenna, refer to the descriptions of the dual-polarized antenna for understanding. In this case, $H \in \mathbb{C}^{M \times N}$. The precoding matrix H may satisfy a formula (1-1). The precoding matrix H is a channel corresponding to one receive antenna port of the terminal device or a precoding matrix corresponding to one data stream.

$$H \approx S'C_1'C_2'C_3'F'^H \text{ Formula (1-1)}$$

In the formula (1-1), $S' \in \mathbb{C}^{2M \times B}$, $C_1' \in \mathbb{C}^{B \times K_{s'}}$, $C_2' \in \mathbb{C}^{K_{s'} \times D}$, $C_3' \in \mathbb{C}^{D \times F}$, and $F' \in \mathbb{C}^{N \times F}$. S' is a spatial domain basis matrix and is a matrix including B spatial domain basis vectors, and each spatial domain basis vector is 2M-dimensional. F' is a frequency domain basis matrix and is a matrix including F frequency domain basis vectors, and each frequency domain basis vector is N-dimensional. $C_1'$ is a superposition coefficient matrix 1, and represents a coefficient matrix including a plurality of groups of spatial domain basis vector coefficients, or represents a coefficient matrix including a weighting coefficient corresponding to each of the B spatial domain basis vectors. $S'C_1'$ represents a new spatial domain basis matrix formed by a linear combination of the B spatial domain basis vectors in S'. $C_3'$ is a superposition coefficient matrix 3, and represents a coefficient matrix including a plurality of groups of frequency domain basis vector coefficients, or represents a coefficient matrix including a weighting coefficient corresponding to each of the F frequency domain basis vectors. $C_3'F'^H$ represents a new frequency domain basis matrix formed by a linear combination of F frequency domain basis vectors in F'. $C_2'$ is a superposition coefficient matrix 2, and represents a coefficient matrix including a superposition coefficient corresponding to a space-frequency basis including each spatial domain basis vector in $S'C_1'$ and each frequency domain basis vector in $C_3'F'^H$, or a coefficient matrix including a superposition coefficient corresponding to each spatial domain basis vector in $S'C_1'$ and each frequency domain basis vector in $C_3'F'^H$. B is a quantity of spatial domain basis vectors determined by the access network device or the terminal device. $K_S'$ represents a quantity of weighting coefficients corresponding to each spatial domain basis vector. D represents a quantity of weighting coefficients corresponding to each frequency domain basis vector. F is a quantity of frequency domain basis vectors determined by the access network device or the terminal device. N is a quantity of frequency units, that is, a length of the frequency domain basis vector. $\mathbb{C}$ represents a complex number set in this specification. It can be learned that H is a complex matrix with 2M rows and N columns.

In a manner of separate compression in spatial domain and frequency domain, one space-frequency basis may be represented by a combination of one frequency domain basis in the frequency domain basis matrix and one spatial domain basis in the spatial domain basis matrix, for example, represented by one frequency domain basis in a frequency domain basis matrix formed by a linear combination of F frequency domain basis vectors and one spatial domain basis in a spatial domain basis matrix formed by a linear combination of B spatial domain basis vectors. During reporting of downlink CSI, the terminal device reports, to the access network device, information indicating H. Specifically, the terminal device may report, to the access network device, information indicating a channel corresponding to one receive antenna port or a precoding matrix H corresponding to one data stream.

(9) Joint compression in spatial domain and frequency domain means that a channel parameter is quantized by using a change rule of a channel in joint space-frequency domain, and a quantity of weighting coefficients that need to be reported when the terminal device reports downlink CSI is reduced, to compress and report a precoding matrix. Optionally, a channel matrix may also be compressed and reported in this manner.

Specifically, one space-frequency basis may be a vector in a vector matrix represented by a linear combination of Z1 space-frequency basis vectors and Z1 groups of first weighting coefficients. One space-frequency basis vector is uniquely determined by using one spatial domain basis vector and one frequency domain basis vector. For example, one space-frequency basis vector may be a vector formed by a Kronecker (Kronecker) product of one spatial domain basis vector and one frequency domain basis vector.

For example, a formula (1-2) represents Z2 space-frequency bases.

$$\hat{B} = [\hat{b}_1 \quad \cdots \quad \hat{b}_{Z2}] = BC_{13} = [b_1 \quad \cdots \quad b_{Z1}]\begin{bmatrix} c_{1,1} & \cdots & c_{1,Z2} \\ \vdots & \ddots & \vdots \\ c_{Z1,1} & \cdots & c_{Z1,Z2} \end{bmatrix} \text{Formula (1-2)}$$

Each column vector $\hat{b}_n$ ($1 \le n \le Z2$) in the matrix $\hat{B}$ is one space-frequency basis; each column vector $b_m$ ($1 \le m \le Z1$) in the matrix B is one space-frequency basis vector; the weighting coefficient matrix $C_{13}$ is $Z1 \times Z2$ -dimensional; and each row corresponds to one group of weighting coefficients 1. For an $n^{th}$ space-frequency basis, $\hat{b}_n = \sum_{m=1}^{Z1} c_{m,n} * b_m$. $\hat{b}_n$ is one space-frequency basis, and is formed by a linear combination of Z1 space-frequency basis vectors.

Any space-frequency basis is a linear combination of Z1 space-frequency basis vectors based on Z1 groups of weighting coefficients 1. One group of weighting coefficients 1 includes Z2 weighting coefficients 1. For example, as shown in $C_{13}$ shown in the foregoing formula (1-2), each row vector is one group of weighting coefficients 1, each row vector includes Z2 elements, and each element is one weighting coefficient 1. For example, an $m^{th}$ group of weighting coefficients 1 in the Z1 groups of weighting coefficients 1 includes Z2 weighting coefficients 1. An $n^{th}$ weighting coefficient 1 in the Z2 weighting coefficients 1 is a weight representing an $m^{th}$ space-frequency basis vector corresponding to an $n^{th}$ space-frequency basis. It should be noted that a value of Z1 and a value of Z2 may be configured by the access network device for the terminal device, or may be determined by the terminal device and then reported to the access network device, or may be determined by the access network device and the terminal device through negotiation, or may be agreed on in a protocol. This is not specifically limited in this application.

Specifically, the precoding matrix is represented by using a linear approximate combination of Z2 space-frequency bases and Z2 groups of weighting coefficients 2. For example, the precoding matrix W may be expressed as the following formula (1-3).

$$W = [w_1 \quad \cdots \quad w_R] = \hat{B}C_2'' = [\hat{b}_1 \quad \cdots \quad \hat{b}_{Z2}] \begin{bmatrix} \tilde{c}_{1,1} & \cdots & \tilde{c}_{1,R} \\ \vdots & \ddots & \vdots \\ \tilde{c}_{Z2,1} & \cdots & \tilde{c}_{Z2,R} \end{bmatrix} \quad \text{Formula (1-3)}$$

W is a to-be-reported precoding matrix, and includes R column vectors $w_r$ ($1 \le r \le R$), and each column vector $\hat{b}_n$ ($1 \le n \le Z2$) in $\hat{B}$ is one space-frequency basis. The weighting coefficient matrix $C_2''$ is $Z2 \times R$-dimensional, and includes weighting coefficients corresponding to space-frequency bases $\hat{B}$. Each column corresponds to one group of weighting coefficients 2. Each column of weighting coefficients 2 and $\hat{B}$ are jointly calculated to obtain a precoding vector of one receive antenna port or one data stream. In other words, one column vector in W represents a precoding vector of one receive antenna port of the terminal device or one data stream. For an $r^{th}$ receive antenna port or an $r^{th}$ data stream,

$w_r = \sum_{n=1}^{N} \tilde{c}_{n,r} * \hat{b}_n$ , where r is an integer greater than or equal to 1 and less than or equal to R, and R is a quantity of receive antenna ports of the terminal device or a quantity of data streams.

(10) A spatial domain eigenbasis may also be referred to as a spatial domain eigenbasis vector, a spatial domain eigenvector, a beam eigenvector, a spatial domain beam eigenbasis vector, or the like. A difference between the spatial domain eigenbasis and a spatial domain basis lies in that the spatial domain eigenbasis is a non-DFT vector. The spatial domain eigenbasis is a non-DFT vector obtained by the terminal device by using historical channel statistics, and feedback overheads of weighting coefficients obtained by decomposing a precoding matrix based on the non-DFT vector are less than those of weighting coefficients in the spatial domain basis.

(11) A frequency domain eigenbasis may also be referred to as a frequency domain eigenbasis vector, a frequency domain eigenvector, a delay domain eigenvector, or a delay domain eigenbasis vector. A difference between the frequency domain eigenbasis and a frequency domain basis lies in that the frequency domain eigenbasis is a non-DFT vector. The frequency domain eigenbasis is a non-DFT basis obtained by the terminal device by using historical channel statistics, and feedback overheads of weighting coefficients obtained by decomposing a precoding matrix based on the non-DFT vector less than those of weighting coefficients in the frequency domain basis.

(12) A space-frequency eigenbasis may also be referred to as a space-frequency eigenbasis vector, a space-frequency eigenvector, or the like. A difference between the space-frequency eigenbasis and a space-frequency basis lies in that the space-frequency eigenbasis is a non-DFT vector. The space-frequency eigenbasis is a non-DFT vector obtained by the terminal device by using historical channel statistics, and feedback overheads of weighting coefficients in the non-DFT vector are less than those of weighting coefficients in the space-frequency basis.

(13) Codebook

In CSI measurement, PMI feedback is completed based on a set of codebook parameters agreed on by the access network device and the terminal device. The following describes several codebook structures and corresponding combinations of codebook parameter configurations.

(1) An R16 eTypeII codebook structure and a corresponding combination of codebook parameter configurations are used as an example. A precoding matrix in an R16 eTypeII codebook is determined by using a weighting coefficient, a spatial domain basis, and a frequency domain basis.

For example, the R16 eTypeII codebook structure may be expressed in a form of the following formula (1-4), where each transport layer has one matrix W. The transport layer may also be referred to as a layer (Layer) for short, or may be referred to as a stream or a transport stream.

$$W = W_1 \widetilde{W}_2 W_f^H \quad \text{Formula (1-4)}$$

$W_1 \in \mathbb{C}^{P_{CSI-RS} \times 2L}$ is a spatial domain basis matrix, and represents 2L spatial domain beams selected from $P_{CSI-RS}$ spatial beams or 2L columns selected from a DFT matrix set. $P_{CSI-RS}$ is a quantity of channel state information-reference signal (channel state information-reference signal, CSI-RS) ports. 2L is a quantity of selected spatial domain bases, or 2L is a quantity of selected beams, or 2L is a quantity of selected beam combinations. $\widetilde{W}_2 \in \mathbb{C}^{2L \times M_v}$ is a weighting coefficient matrix corresponding to the 2L selected beams. $W_f \in \mathbb{C}^{N_3 \times M_v}$ is a frequency domain basis matrix, and represents $M_v$ columns selected from the DFT matrix set. $N_3$ is a quantity of frequency domain units, and the quantity of frequency domain units may be a quantity of frequency domain resource blocks (Resource Blocks, RBs) or a quantity of

subbands. $M_v$ is a quantity of selected frequency domain units, that is, a quantity of selected frequency domain bases. The subscript u represents a quantity of transport layers, that is, a total quantity of transport layers. It may be understood that each weighting coefficient in $\tilde{W}_2$ corresponds to one spatial domain basis in $W_1$ and one frequency domain basis in $W_f^H$.

It should be noted that the formulas (1-1), (1-3), and (1-4) are all possible forms of a precoding matrix.

A technology used in (1) is to decompose the precoding matrix into a spatial domain basis, a frequency domain basis, and a weighting coefficient for feedback, and both the spatial domain basis and the frequency domain basis are DFT vectors. The following uses an example in which a precoding matrix is decomposed into non-DFT vectors.

2. R17 FeTypeII codebook structure and corresponding combination of codebook parameter configurations

The R17 FeTypeII codebook structure may be expressed in a form of the following formula (1-5), where each transport layer has one matrix W.

$$W = W_1 \widetilde{W}_2 W_f^H \quad \text{Formula (1-5)}$$

$W_1 \in \mathbb{N}^{P_{\text{CSI-RS}} \times K_1}$ is a port selection matrix, and each column of $W_1$ has only one value 1, indicating that $K_1$ ports are selected from $P_{\text{CSI-RS}}$ ports. $K_1$ is a quantity of selected ports, that is, a quantity of selected port basis vectors.

$\widetilde{W}_2 \in \mathbb{C}^{K_1 \times M_2}$ is a weighting coefficient matrix corresponding to the $K_1$ selected ports. $W_f \in \mathbb{C}^{N_3 \times M_2}$ is a frequency domain basis vector matrix. $N_3$ is a quantity of frequency domain units, and the quantity of frequency domain units may be a quantity of frequency domain resource blocks or a quantity of subbands. $W_f$ represents $M_2$ columns selected from a DFT matrix set. $M_2$ is a quantity of selected frequency domain units, that is, a quantity of selected frequency domain basis vectors. In an existing protocol of R17, the following eight combinations of codebook parameter configurations in triplets are specified, as shown in Table 1. The triplet includes $\alpha$, M, and $\beta$.

Table 1 Combinations of codebook parameter configurations in triplets in R17

| paramCombination-r17 | M | $\alpha$ | $\beta$ |
|---|---|---|---|
| 1 | 1 | ¾ | ½ |
| 2 | 1 | 1 | ½ |
| 3 | 1 | 1 | ¾ |
| 4 | 1 | 1 | 1 |
| 5 | 2 | ½ | ½ |
| 6 | 2 | ¾ | ½ |
| 7 | 2 | 1 | ½ |
| 8 | 2 | 1 | ¾ |

$\alpha$ is used to determine a value of $K_1$, where $K_1 = \alpha P_{\text{CSI-RS}}$. $\beta$ indicates a ratio of non-zero coefficients, that is, a ratio of non-zero coefficients in $\tilde{W}_2$.

The terminal needs to perform search in two dimensions: spatial domain and frequency domain. To limit CSI feedback overheads, a quantity of non-zero coefficients in $\tilde{W}_2$ corresponding to each transport layer needs to be determined. $K_0 = \lceil \beta K_1 M \rceil$, $K_l^{NZ} \leq K_0$, $K_l^{NZ}$ is a quantity of non-zero coefficients in $\tilde{W}_2$ corresponding to a transport layer 1, and $K^{NZ} = \sum_{l=1}^{\upsilon} K_l^{NZ} \leq 2K_0$. $K^{NZ}$ is a total quantity of non-zero coefficients. $l = 1, ..., $ or $\upsilon$, and $l$ and $\upsilon$ are positive integers.

(3) Each transport layer has one precoding matrix **W.** The precoding matrix may be decomposed into a spatial domain eigenbasis, a frequency domain eigenbasis, and a weighting coefficient matrix for feedback, and both the spatial domain eigenbasis and the frequency domain eigenbasis are non-DFT vectors. The precoding matrix **W** may be expressed in a form shown in a formula (1-6).

$$W = U_1 C_2 U_f^H \quad \text{Formula (1-6)}$$

$U_1$ represents a spatial domain eigenbasis matrix, and $U_f$ represents a frequency domain eigenbasis matrix.

$U_1$ may include $K_s$ spatial domain eigenbases, and $U_f$ may include $K_f$ frequency domain eigenbases. $C_2$ represents a weighting coefficient matrix (which may also be referred to as a joint weighting coefficient matrix, or may be referred to as another name, and is not limited in this application) jointly corresponding to the $K_s$ spatial domain eigenbases and the $K_f$ frequency domain eigenmatrices. $K_s$ represents a quantity of spatial domain eigenbases included in $U_1$, and $K_f$ represents a quantity of frequency domain eigenbases included in $U_f$. domain eigenbasis and the frequency domain eigenbasis may be non-DFT vectors obtained by the terminal device by using historical channel statistics, and feedback overheads of non-zero weighting coefficients in the non-DFT vector are less than feedback overheads of non-zero weighting coefficients obtained through decomposition based on a DFT vector set.

For example, $U_1$ and $U_f$ may be obtained by performing singular value decomposition on a statistical covariance matrix of a channel. For example, the terminal device obtains a channel matrix $H_t \in \mathbb{C}^{P_{CSI-RS} \times N_3}$ of time units t=1, 2, ..., and T through periodic CSI-RS measurement, where $P_{CSI-RS}$ is a quantity of spatial domain units of the channel, and $N_3$ is a quantity of frequency domain units of the channel. The terminal device calculates a spatial domain statistical covariance matrix $R_s = \frac{1}{T}\sum_{t=1}^{T} H_t H_t^H$ of the channel, and performs singular value decomposition on $R_s$ to obtain the first $K_s$ corresponding eigenvectors $U_1$ with largest eigenvalues in $R_s$, where $U_1 \in \mathbb{C}^{P_{CSI-RS} \times K_s}$, and $K_s \leq P_{CSI-RS}$.

The terminal device calculates a frequency domain statistical covariance matrix $R_f = \frac{1}{T}\sum_{t=1}^{T} H_t^H H_t$ of the channel, and performs singular value decomposition on $R_f$ to obtain the first $K_f$ corresponding eigenvectors $U_f$ with largest eigenvalues in $R_f$, where $U_f \in \mathbb{C}^{N_3 \times K_f}$, and $K_f \leq N_3$. After obtaining $U_1$ and $U_f$, the terminal device calculates $C_2 = U_1^H \widehat{W} U_f$, where $\widehat{W}$ is a precoding matrix obtained through CSI-RS measurement, and a to-be-reported precoding matrix $W$ is expressed as $W = U_1 C_2 U_f^H \approx \widehat{W}$.

(4) A precoding matrix may be decomposed into a space-frequency eigenbasis and a weighting coefficient matrix for feedback, and the space-frequency eigenbasis is a non-DFT vector. The precoding matrix W may be expressed in a form shown in a formula (1-7).

$$W_{vec} = W_{sf} C_3 \qquad \text{Formula (1-7)}$$

$W_{sf}$ represents a space-frequency eigenbasis matrix, and $C_3$ represents a weighting coefficient matrix when the space-frequency eigenbasis matrix $W_{sf}$ is used. $W_{vec} \in \mathbb{C}^{P_{CSI-RS} N_3 \times 1}$ is a vectorized form of the precoding matrix, $W_{sf} \in \mathbb{C}^{P_{CSI-RS} N_3 \times K_{sf}}$, and $C_3 \in \mathbb{C}^{K_{sf} \times 1}$.

For example, $W_{sf}$ may be obtained by performing singular value decomposition on a statistical covariance matrix of a channel. It is assumed that the terminal device obtains a channel matrix $H'_t \in \mathbb{C}^{P_{CSI-RS} N_3 \times 1}$ of time units t=1, 2, ..., and T through periodic CSI-RS measurement, where $P_{CSI-RS}$ is a quantity of spatial domain units of the channel, and $N_3$ is a quantity of frequency domain units of the channel. The terminal device calculates a spatial domain statistical covariance matrix $R_{sf} = \frac{1}{T}\sum_{t=1}^{T} H'_t H'^H_t$ of the channel, and performs singular value decomposition on $R_{sf}$ to obtain the first $K_{sf}$ corresponding eigenvectors $W_{sf}$ with largest eigenvalues in $R_{sf}$, where $W_{sf} \in \mathbb{C}^{P_{CSI-RS} N_3 \times K_{sf}}$, and $K_{sf} \leq P_{CSI-RS} N_3$. After obtaining $W_{sf}$ the terminal device calculates $C_3 = W_{sf}^H \widehat{W}_{vec}$, where $\widehat{W}_{vec} \in \mathbb{C}^{P_{CSI-RS} N_3 \times 1}$ is a vectorized form of a precoding matrix obtained through CSI-RS measurement, and a vectorized form of a to-be-reported precoding matrix $W_{vec}$ is expressed as $W_{vec} = W_{sf} C_3 \approx \widehat{W}_{vec}$.

In R16 and R17 codebooks, a PMI matrix is a two-dimensional space-frequency matrix (that is, a weighting coefficient matrix), and corresponding reporting amounts are a location of a non-zero weighting coefficient in the two-dimensional weighting coefficient matrix and each non-zero weighting coefficient value (represented by an amplitude and a phase). For each layer, the terminal device needs to report one two-dimensional space-frequency matrix (that is, $\tilde{W}_2$), and two dimensions of the two-dimensional space-frequency matrix are respectively a beam domain and a delay domain (which are respectively a transform domain of a spatial domain and a transform domain of a frequency domain).

It is assumed that a weighting coefficient matrix corresponding to a layer l is $C_{l,i,f}$, $l$ = 1,2, ..., or $\upsilon$ is a layer sequence number, $i$ = 0,1, ..., or $K$ - 1 is a selected beam sequence number (where K beams are selected from 2L beams in PMI feedback, and other beams are not fed back), and $f$ = 0,1, ..., or $M'$ - 1 is a selected delay sequence number (where $M'$ delays are selected from $N_3$ delays). Each weighting coefficient corresponds to one reporting priority $Pri(l, i, f)$. A weighting coefficient with a smaller priority $Pri(l, i, f)$ indicates a higher reporting priority.

Using the R17 FeTypeII codebook as an example, $Pri(l, i, f) = K \cdot v \cdot f + v \cdot i + l$.

Using the R16 codebook as an example, $Pri(l, i, f) = K \cdot \upsilon \cdot \pi(f) + \upsilon \cdot i + l$.

$$\pi(f) = \min\left(2 \cdot n_{3,l}^{(f)}, 2 \cdot \left(N_3 - n_{3,l}^{(f)}\right) - 1\right)$$, $N_3$ is a total quantity of delays, and $n_{3,l}^{(f)}$ is a sequence number of an $f^{th}$ delay selected from an $l^{th}$ layer (where for example, $N_3$=6, M=3, and it is assumed that three delays 0, 1, and 5 are selected from delays whose sequence numbers are 0, 1, 2, 3, 4, and 5 in the $l^{th}$ layer; in this case, $n_{3,l}^{(0)} = 0$, $n_{3,l}^{(1)} = 1$, and $n_{3,l}^{(2)} = 5$). A difference between the R16 codebook and the R17 codebook lies in the following: When coefficients of different delays are reported in the R16 codebook, a coefficient at a location of a delay 0 is preferentially reported, and then coefficients at two sides of the delay 0 are sequentially reported. A reason is that only a spatial domain relationship needs to be maintained when subband-level precoding is fed back based on the R16 codebook, that is, different phase rotation may be performed on different frequency domains, and a location of a strongest coefficient is moved to the location of the delay 0, without affecting precoding performance. In this case, the strongest coefficient is at the location of the delay 0, and the second strongest coefficient is around the location of the delay 0. Therefore, the coefficient at the location of the delay 0 is preferentially reported, and then coefficients at two sides of the location of the delay 0 are reported.

In a current CSI feedback technology, there is only a feedback manner for a non-zero weighting coefficient matrix with a DFT vector as a basis, and there is no effective manner for a feedback manner for a non-zero weighting coefficient matrix with a non-DFT vector as a basis.

Based on this, to additionally feed back a spatial/frequency domain eigenbasis or a space-frequency eigenbasis, an effective feedback manner is to further decompose the spatial domain eigenbasis, the frequency domain eigenbasis, or the space-frequency eigenbasis, to decompose the spatial domain eigenbasis based on a spatial domain basis, decompose the frequency domain eigenbasis based on a frequency domain basis, and decompose the space-frequency eigenbasis based on a space-frequency basis. Refer to a formula (1-8), a formula (1-9), and a formula (1-10).

$$U_1 = C_s W_1 \quad \text{Formula (1-8)}$$

$$U_f = C_f W_f \quad \text{Formula (1-9)}$$

$$W_{sf} = C_{sf} B_{sf} \quad \text{Formula (1-10)}$$

$C_s$ represents a weighting coefficient matrix obtained by decomposing the spatial domain eigenbasis based on the spatial domain basis. $C_f$ represents a weighting coefficient matrix obtained by decomposing the frequency domain eigenbasis based on the frequency domain basis. $C_{sf}$ represents a weighting coefficient matrix obtained by decomposing the space-frequency eigenbasis based on the space-frequency basis, and $B_{sf}$ represents a space-frequency basis matrix.

Because a spatial domain dimension and a frequency domain dimension of the channel change slowly, the spatial domain eigenbasis, the frequency domain eigenbasis, or the space-frequency eigenbasis selected by the terminal device changes slowly. Therefore, in embodiments of this application, for a weighting coefficient matrix $C_s$, $C_f$, $C_{sf}$ obtained through decomposition respectively based on the spatial domain eigenbasis, the frequency domain eigenbasis, or the space-frequency eigenbasis, the terminal device may send, to the access network device in a feedback manner based on a long period (for example, 200 ms), the weighting coefficient matrix obtained through decomposition respectively based on the space-frequency eigenbasis, the frequency domain eigenbasis, or the space-frequency eigenbasis. For $C_2$ or $C_3$, the weighting coefficient matrix may be sent to the access network device in a feedback manner based on a short period.

The following describes in detail a basis feedback method and an apparatus provided in embodiments of this application. Embodiments of this application are mainly described from a perspective of feeding back the weighting coefficient matrix $C_s$, $C_f$, $C_{sf}$ obtained through decomposition respectively based on the spatial domain eigenbasis, the frequency domain eigenbasis, or the space-frequency eigenbasis.

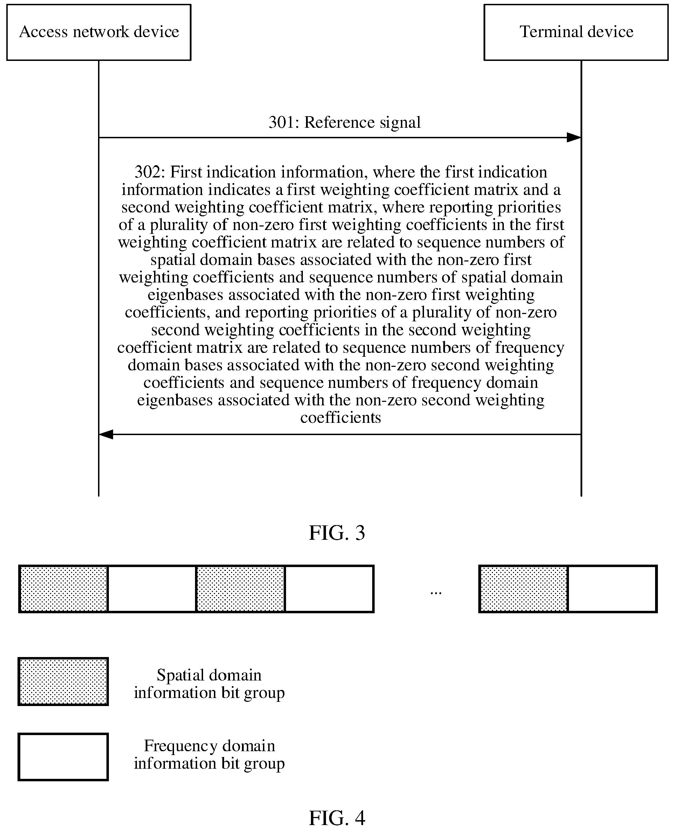

FIG. 3 is a schematic flowchart of a basis feedback method according to an embodiment of this application. FIG. 3 is described from a perspective of feeding back a spatial domain eigenbasis and a frequency domain eigenbasis. As shown in FIG. 3, the basis feedback manner includes the following step 301 and step 302. The method shown in FIG. 3 may be performed by a terminal device and an access network device. Alternatively, the method shown in FIG. 3 may be performed by a chip in the terminal device and a chip in the access network device. In FIG. 3, an example in which the method is performed by the terminal device and the access network device is used for description.

301: The access network device sends a reference signal to the terminal device, and the terminal device receives the reference signal from the access network device. The downlink reference signal is used by the terminal device to feed back a used spatial domain eigenbasis and a used frequency domain eigenbasis. The spatial domain eigenbasis and the frequency domain eigenbasis are non-DFT vectors. For example,

the reference signal may be a CSI-RS, or a demodulation reference signal (demodulation reference signal, DMRS). It should be understood that the reference signal may alternatively be another signal that can be used by the terminal device to measure a channel. This is not limited in this application.

302: The terminal device sends first indication information to the access network device. The first indication information indicates a weighting coefficient matrix of the spatial domain eigenbasis and a weighting coefficient matrix of the frequency domain eigenbasis. For ease of distinguishing, the weighting coefficient matrix of the spatial domain eigenbasis is referred to as a first weighting coefficient matrix, for example, $C_s$. The weighting coefficient matrix of the frequency domain eigenbasis is referred to as a second weighting coefficient matrix, for example, $C_f$, weighting coefficient, and a weighting coefficient in the second weighting coefficient matrix is referred to as a second weighting coefficient.

For example, the first indication information may be carried in radio resource control (radio resource control, RRC), a medium access control-control element (media access control-control element, MAC-CE), or CSI and reported to the access network device.

In an example, a quantity of spatial domain eigenbases is $K_s$, and a quantity of frequency domain eigenbases is $K_f$. $K_s$ and $K_f$ may be configured by the access network device by using signaling such as RRC, a MAC-CE, or downlink control information (downlink control information, DCI). Alternatively, values of $K_s$ and $K_f$ may be agreed on in a protocol, or may be determined by the terminal device. This is not specifically limited in embodiments of this application.

The first weighting coefficient matrix may be understood as being obtained by decomposing each of the $K_s$ spatial domain eigenbases based on 2L' spatial domain bases. A weighted sum of the first weighting coefficient matrix and the 2L' spatial domain bases in a spatial domain basis set is used to determine the $K_s$ spatial domain eigenbases. Refer to the formula (1-8). The second weighting coefficient matrix is obtained by decomposing each spatial domain eigenbasis in the $K_f$ frequency domain eigenbases based on $M_v'$ frequency domain bases. A weighted sum of the second weighting coefficient matrix and the $M_v'$ frequency domain bases in a frequency domain basis set is used to determine the $K_f$ frequency domain eigenbases. Refer to (1-9).

The spatial domain basis set includes a plurality of spatial domain bases, and the 2L' spatial domain bases may include all spatial domain bases in the spatial domain basis set, or may be a part of spatial domain bases in the spatial domain basis set. The frequency domain basis set includes a plurality of frequency domain bases, and the $M_v'$ frequency domain bases may include all frequency domain bases in the frequency domain basis set, or may be a part of frequency domain bases in the frequency domain basis set.

In this application, a difference between a spatial domain basis and a frequency domain basis and a spatial domain eigenbasis and a frequency domain eigenbasis lies in that the spatial domain basis may be a DFT vector, a conjugate transpose vector of a DFT vector, or an over-sampled DFT vector, and the frequency domain basis may be a DFT vector, a conjugate transpose vector of the DFT vector, or an over-sampled DFT vector. For example, the spatial domain basis and the frequency domain basis each are a DFT vector; or the spatial domain basis and the frequency domain basis each are an over-sampled DFT vector; or the spatial domain basis is a DFT vector, and the frequency domain basis is an over-sampled DFT vector; or the spatial domain basis is an over-sampled DFT vector, and the frequency domain basis is a DFT vector.

In this application, the frequency domain basis set and the spatial domain basis set may be configured by the access network device. For example, the access network device may configure the frequency domain basis set and the spatial domain basis set by using signaling such as RRC, a MAC-CE, or DCI. Alternatively, the frequency domain basis set and the spatial domain basis set may be agreed on in a protocol. Signaling for configuring the frequency domain basis set and the spatial domain basis set and signaling for configuring the values of $K_s$ and $K_f$ may be same signaling, or may be different signaling. Certainly, in some embodiments, the frequency domain basis set and the spatial domain basis set may alternatively be configured by using different signaling. Similarly, the values of $K_s$ and $K_f$ may alternatively be configured by using different signaling.

With reference to the foregoing example, it may be understood that the first weighting coefficient matrix includes $2L'K_s$ first weighting coefficients, each of the $2L'K_s$ first weighting coefficients is associated with one of the $K_s$ spatial domain eigenbases and one of the 2L' spatial domain bases, the first weighting coefficient may be represented as $C_s(i, k^1)$, $i$ represents a sequence number of the selected spatial domain basis, $k^1$ represents a sequence number of the spatial domain eigenbasis, $i = 0, 1, ...,$ or 2L - 1, and $k^1 = 0, 1, ...,$ or $K_s - 1$. The $K_s$ spatial domain eigenbases may be determined based on a weighted sum of the $2L' * K_s$ first weighting coefficients and the 2L' spatial domain bases, and a weighting coefficient used for the weighted sum of the $2L'$ spatial domain bases is the first weighting coefficient. The second weighting coefficient matrix includes $M_\upsilon'{}^*K_f$ second weighting coefficients, each of the $M_\upsilon'{}^*K_f$ second weighting coefficients is associated with one of the $K_f$ frequency domain eigenbases and one of the $M_\upsilon'$ frequency domain bases. The $K_f$ frequency domain eigenbases may be determined based on a weighted sum of the $M_\upsilon'{}^*K_f$ second weighting coefficients and the $M_\upsilon'$ frequency domain bases. A weighting coefficient used for the weighted sum of the $M_\upsilon'$ frequency domain bases is the second weighting coefficient. The first weighting coefficient may be represented as $C_f(f, k^2)$, $f$ represents a sequence number of the selected frequency domain basis, $k^2$ represents a sequence number of the frequency domain eigenbasis, $f = 0, 1, ...$ , or $M_\upsilon$ - $k^2 = 0, 1, ...,$ or $K_f$ - 1.

In this embodiment of this application, when the terminal device reports the first weighting coefficient matrix and the second weighting coefficient matrix to the access network device, to reduce used reporting overheads, the terminal device may report only a non-zero first weighting coefficient in the first weighting coefficient matrix and a non-zero second weighting coefficient in the second weighting coefficient matrix. Reporting rankings respectively corresponding to the non-zero first weighting coefficient in the first weighting coefficient matrix and the non-zero second weighting coefficient in the second weighting coefficient matrix may be determined based on reporting priorities. The reporting priority may be positively correlated with the reporting ranking, that is, a non-zero first weighting coefficient/a non-zero second weighting coefficient with a higher reporting priority is reported earlier.

Reporting priorities of a plurality of non-zero first weighting coefficients in the first weighting coefficient matrix are related to sequence numbers of spatial domain bases associated with the non-zero first weighting coefficients and sequence numbers of spatial domain eigenbases associated with the non-zero first weighting coefficients. It may be understood that each non-zero first weighting coefficient is associated with one reporting priority. The reporting priority of the non-zero first weighting coefficient may be represented as $Pri_s(i, k^1)$, $i$ represents a sequence number of the selected spatial domain basis, $i = 0, 1, ...,$ or $2L$ - 1, and $k^1 = 0, 1, ...,$ or $K_s$ - 1.

Reporting priorities of a plurality of non-zero second weighting coefficients in the second weighting coefficient matrix are related to sequence numbers of frequency domain bases associated with the non-zero second weighting coefficients and sequence numbers of frequency domain eigenbases associated with the non-zero second weighting coefficients. It may be understood that each non-zero second weighting coefficient is associated with one reporting priority. The reporting priority of the non-zero second weighting coefficient may be represented as $Pri_f(f, k^2)$, $f$ represents a sequence number of the selected frequency domain basis, $k^2$ represents a sequence number of the frequency domain eigenbasis, $f = 0, 1, ...,$ or $M_\upsilon$ - 1, and $k^2 = 0, 1, ...,$ or $K_f$ - 1.

In an example, the reporting priorities of the plurality of non-zero first weighting coefficients included in the first weighting coefficient matrix may satisfy the following formula (2-1) or formula (2-2).

$$Pri_s(i, k^1) = 2L'k^1 + i \quad \text{Formula (2-1)}$$

$$Pri_s(i, k^1) = K_s i + k^1 \quad \text{Formula (2-2)}$$

i represents the sequence number of the selected spatial domain basis, $k^1$ represents the sequence number of the spatial domain eigenbasis, $i = 0, 1, ...,$ or $2L$ - 1, $k^1 = 0, 1, ...,$ or $K_s$ - 1, and $Pri_s(i, k^1)$ represents a priority of a non-zero first weighting coefficient associated with the spatial domain basis with the sequence number i and the spatial domain eigenbasis with the sequence number k. A smaller value of $Pri_s(i, k^1)$ indicates a higher priority, that is, a corresponding non-zero first weighting coefficient is reported earlier.

In another example, the reporting priorities of the plurality of non-zero second weighting coefficients included in the second weighting coefficient matrix satisfy any one of a formula (2-3) to a formula (2-6).

$$Pri_f(f, k^2) = M_\upsilon k^2 + \pi'(f) \quad \text{Formula (2-3)}$$

$$Pri_f(f, k^2) = K_f \pi'(f) + k^2 \quad \text{Formula (2-4)}$$

$$Pri_f(f, k^2) = M_\upsilon k^2 + f \quad \text{Formula (2-5)}$$

$$Pri_f(f, k^2) = K_f f + k^2 \quad \text{Formula (2-6)}$$

$$\pi'(f) = min\left(2 \cdot n_3^{(f)}, 2 \cdot \left(N_3 - n_3^{(f)}\right) - 1\right)$$ , $f$ represents the sequence number of the selected frequency domain basis, $k^2$ represents the sequence number of the spatial domain eigenbasis, $f = 0, 1, ...,$ or $M_v'-1$, $k^2 = 0, 1, ...,$ or $K_f$-, $Pri_f(f, k^2)$ represents a priority of a non-zero second weighting coefficient associated with the frequency domain basis with the sequence number $f$ and the spatial domain eigenbasis with the sequence number $k^2$, $N_3$ represents a total quantity of frequency domain bases (which may be understood as a quantity of frequency domain bases included in the frequency domain basis set), and $n_3^{(f)}$ represents a sequence number of the frequency domain basis with the sequence number $f$ in the $N_3$ frequency domain bases. For example, $N_3 = 6$, $M_v' = 3$, and three frequency domain bases 0, 1, and 5 are selected from frequency domain bases whose sequence numbers are 0, 1, 2, 3, 4, and 5. In this case, $n_3^{(0)} = 0$, $n_3^{(1)} = 1$, and = 5.

In this embodiment of this application, reporting rankings of the non-zero first weighting coefficient of the spatial domain eigenbasis and the non-zero second weighting coefficient of the frequency domain eigenbasis may be that the non-zero first weighting coefficient of the spatial domain eigenbasis is earlier than the non-zero second weighting coefficient of the frequency domain eigenbasis, or may be that the non-zero first weighting coefficient of the spatial domain eigenbasis is later than the non-zero second weighting coefficient of the frequency domain eigenbasis.

In a possible implementation, in this embodiment of this application, the non-zero first weighting coefficient of the spatial domain eigenbasis and the non-zero second weighting coefficient of the frequency domain eigenbasis may be further grouped, and reported in a group-wise interleaving manner.

In an example, the terminal device may group the non-zero first weighting coefficient of the spatial domain eigenbasis and the non-zero second weighting coefficient of the frequency domain eigenbasis into N information bit groups. Therefore, the first indication information includes at least J information bit groups in the N information bit groups, where N is a positive integer, and J is a positive integer less than or equal to N.

Example 1: Grouping may be performed based on a sequence number of a spatial domain/frequency domain eigenbasis.

An $n^{th}$ information bit group in the N information bit groups includes information bits of non-zero first weighting coefficients corresponding to $K_{sn}$ spatial domain eigenbases and information bits of non-zero second weighting coefficients corresponding to $K_{fn}$ spatial domain eigenbases, where $\sum_{n=1}^{N} K_{sn} = K_s$, and $\sum_{n=1}^{N} K_{fn} = K_f$.

Quantities of spatial domain eigenbases included in the information bit groups may be the same or may be different, and quantities of frequency domain eigenbases included in the information bit groups may be the same or may be different.

For example, the information bits of the non-zero first weighting coefficients and the information bits of the non-zero second weighting coefficients may be evenly allocated to the N information bit groups based on a quantity of spatial domain/frequency domain eigenbases. When $n = 1, 2, ...,$ or N-1, $K_{sn} = \lceil K_s/N \rceil$, and $K_{fn} = \lceil K_f/N \rceil$, or when $n = N$, $K_{sn} = K_s - (N-1)\lceil K_s/N \rceil$, and $K_{fn} = K_f - (N-1)\lceil K_f/N \rceil$. Alternatively, when $n = 1, 2, ...,$ or N-1, $K_{sn} = \lfloor K_s/N \rfloor$, and $K_{fn} = \lfloor K_f/N \rfloor$, or when $n = N$, $K_{sn} = K_s - (N-1)\lfloor K_s/N \rfloor$, and $K_{fn} = K_f - (N-1)\lfloor K_f/N \rfloor$.

$\lceil \ \rceil$ indicates rounding up, and $\lfloor \ \rfloor$ indicates rounding down.

Example 2: Grouping may be performed based on a sequence number of a spatial domain/frequency domain basis.

An $n^{th}$ information bit group in the N information bit groups includes information bits of non-zero first weighting coefficients corresponding to $l_n$ spatial domain bases and information bits of non-zero second weighting coefficients corresponding to $m_n$ spatial domain eigenbases, where $\sum_{n=1}^{N} l_n = 2L'$, and $\sum_{n=1}^{N} m_n = M_v'$.

For example, the information bits of the non-zero first weighting coefficients and the information bits of the non-zero second weighting coefficients may be evenly allocated to the N information bit groups based on a quantity of spatial domain/frequency domain bases. When $n = 1, 2, ...,$ or N-1, $l_n = \lceil 2L'/N \rceil$, and $m_n = \lceil M_v/N \rceil$, or when $n = N$,

$$l_n = 2L' - (N-1)\lceil 2L'/N\rceil \text{, and } m_n = M_v' - (N-1)\lceil M_v'/N\rceil \text{. Alternatively, when n=1, 2, ..., or N-1,}$$

$$l_n = \lfloor 2L'/N\rfloor \text{, and } m_n = \lfloor M_v/N\rfloor \text{, or when n=N, } l_n = 2L' - (N-1)\lfloor 2L'/N\rfloor \text{, and}$$

$$m_n = M_v' - (N-1)\lfloor M_v'/N\rfloor.$$

Example 3: Grouping may be performed based on a value of a reporting priority.

An $n^{th}$ information bit group in the N information bit groups includes information bits of $N_{sn}$ non-zero first weighting coefficients and information bits of $N_{fn}$ non-zero second weighting coefficients, where $\sum_{n=1}^{N} N_{sn} = N_s$, and $\sum_{n=1}^{N} N_{fn} = N_f$; or $\sum_{n=1}^{N} N_{sn} = N_s - K_s$, and $\sum_{n=1}^{N} N_{fn} = N_f - K_f$; $N_s$ represents a total quantity of non-zero weighting coefficients included in the first weighting coefficient matrix; and $N_f$ represents a total quantity of non-zero weighting coefficients included in the second weighting coefficient matrix. $\sum_{n=1}^{N} N_{sn} = N_s - K_s$ may be understood as that a total quantity of non-zero first weighting coefficients of the N information bit groups is a quantity of non-zero first weighting coefficients other than maximum non-zero first weighting coefficients respectively corresponding to the $K_s$ spatial domain eigenbases in the first weighting coefficient matrix. $\sum_{n=1}^{N} N_{fn} = N_f - K_f$ may be understood as that a total quantity of non-zero second weighting coefficients of the N information bit groups is a quantity of non-zero second weighting coefficients other than maximum non-zero second weighting coefficients respectively corresponding to $K_f$ frequency domain eigenbases in the second weighting coefficient matrix.

For example, the information bits of the non-zero first weighting coefficients and the information bits of the non-zero second weighting coefficients may be evenly allocated to the N information bit groups based on a quantity of non-zero weighting coefficients of the spatial domain/frequency domain bases. When n=1, 2, ..., or N-1, $N_{sn} = \lceil N_s/N\rceil$, and $N_{fn} = \lceil N_f/N\rceil$, or when n=N, $N_{sn} = N_s - (N-1)\lceil N_s/N\rceil$, and $N_{fn} = N_f - (N-1)\lceil N_f/N\rceil$.

Alternatively, when n=1, 2, ..., or N-1, $N_{sn} = \lfloor N_s/N\rfloor$, and $N_{fn} = \lfloor N_f/N\rfloor$, or when n=N, $N_{sn} = N_s - (N-1)\lfloor N_s/N\rfloor$, and $N_{fn} = N_f - (N-1)\lfloor N_f/N\rfloor$.

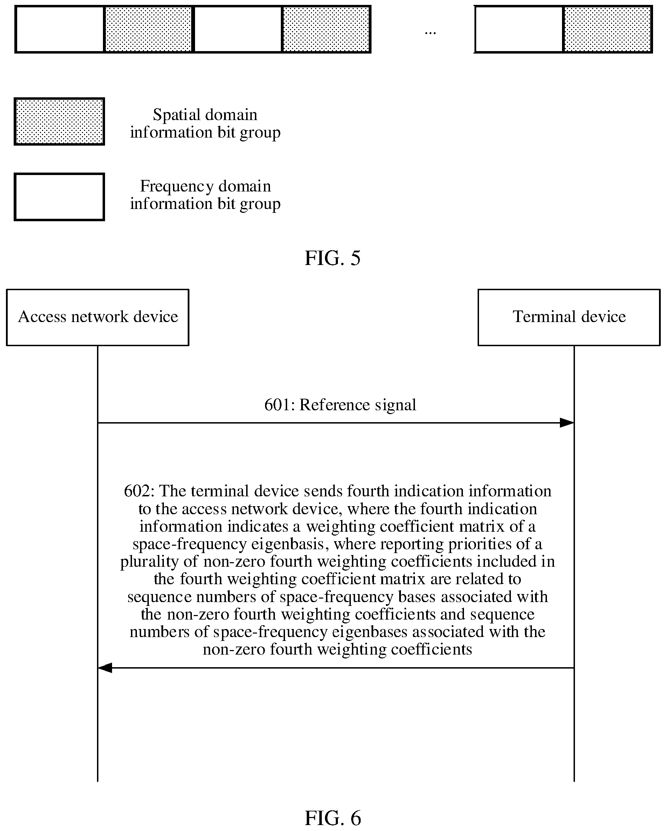

In some embodiments, information bits of non-zero first weighting coefficients in each information bit group as one group and information bits of non-zero second weighting coefficients as the other group may be arranged in the information bit groups as two groups. For example, each of the N information bit groups includes one spatial domain information bit group and one frequency domain information bit group. A reporting priority of the spatial domain information bit group in each information bit group is higher than a reporting priority of the frequency domain information bit group in the information bit group. A reporting priority of one spatial domain information bit group, that is, an $n^{th}$ spatial domain information bit group, in the $n^{th}$ information bit group is higher than a reporting priority of one frequency domain information bit group, that is, an $n^{th}$ frequency domain information bit group, in the $n^{th}$ information bit group. Refer to FIG. 4. Alternatively, a reporting priority of a frequency domain information bit group in each information bit group is higher than a reporting priority of a spatial domain information bit group in the information bit group. Refer to FIG. 5.

For example, with reference to the example 1, the $n^{th}$ spatial domain information bit group includes the information bits of the non-zero first weighting coefficients corresponding to the $K_{sn}$ spatial domain eigenbases, and the $n^{th}$ frequency domain information bit group includes information bits of non-zero second weighting coefficients corresponding to $K_{fn}$ frequency domain eigenbases.

For example, with reference to the example 2, the $n^{th}$ spatial domain information bit group includes the information bits of the non-zero first weighting coefficients corresponding to the $l_n$ spatial domain bases, and the $n^{th}$ frequency domain information bit group includes the information bits of the non-zero second weighting coefficients corresponding to the $m_n$ spatial domain eigenbases.

For example, with reference to the example 3, the $n^{th}$ spatial domain information bit group includes the information bits of the $N_{sn}$ non-zero first weighting coefficients, and the $n^{th}$ frequency domain information bit group includes the information bits of the $N_{fn}$ non-zero second weighting coefficients.

In a possible implementation, when a quantity of reporting resources of the terminal device is insufficient, one information bit group or several information bit group coefficients with a lower ranking may be discarded, or information bits in an information bit group with a lower ranking in group sorting may be discarded, until an overhead limitation is satisfied.

For example, when a quantity of reporting resources of the terminal device is greater than or equal to a quantity of resources of the N information bit groups, the N information bit groups are sent to the access network device, that is, a discarding operation is not performed. For another example, when a quantity of reporting resources of the terminal device is less than a quantity of resources of the N information bit groups, a 1st information bit group to a Jth information bit group in the N information bit groups are sent to the access network device based on the quantity of reporting resources. That is, N-J information bit groups with a lower ranking are discarded. For still another example, when a quantity of reporting resources of the terminal device is less than a quantity of resources of the N information bit groups, a 1st information bit group to a Jth information bit group and a part of information bits in a (J+1)th information bit group are sent to the access network device based on the quantity of reporting resources. That is, information bits in an information bit group with a lower ranking in information bit group sorting are sequentially discarded, until the quantity of reporting resources is satisfied. For example, an information bit in a spatial domain information bit group in the information bit group and an information bit in a frequency domain information bit group in the information bit group may be discarded at an interval. For example, after an information bit of a first weighting coefficient in one spatial domain information bit group is discarded, if the overhead limitation is still not satisfied, an information bit of a second weighting coefficient in a next frequency domain information bit group is discarded; and so on, until the overhead limitation is satisfied.

In a possible implementation, it can be learned from the foregoing descriptions that when the $K_s$ spatial domain eigenbases are separately decomposed based on 2L spatial domain bases, there are a total of $2L'K_s$ first weighting coefficients. In the $2L'K_s$ first weighting coefficients, amplitudes of a part of the coefficients may be extremely small, and close to 0 or equal to 0, and the part of the coefficients are considered as zero-value first weighting coefficients, and do not need to be fed back. In this case, only a part of non-zero first weighting coefficients (set to $K_0$ non-zero first weighting coefficients) may be fed back, and a bitmap (that is, a bit sequence of 0s and 1s) with a length of $2L'K_s$ may indicate coefficients in $2L'K_s$ first weighting coefficients corresponding to the $K_0$ fed-back non-zero first weighting coefficients (that is, indicate locations of the non-zero first weighting coefficients in the first weighting coefficient matrix), where a bit corresponding to the fed-back first weighting coefficient is 1, and a remaining bit is 0. Similarly, when the $K_f$ frequency domain eigenbases are separately decomposed based on $M_v'$ frequency domain bases, there are a total of $M_v'K_f$ second weighting coefficients. In the $M_v'K_f$ second weighting coefficients, amplitudes of a part of the coefficients may be extremely small, and close to 0 or equal to 0, and the part of the coefficients are considered as zero-value second weighting coefficients, and do not need to be fed back. In this case, only a part of non-zero second weighting coefficients (set to $K_1$ non-zero second weighting coefficients) may be fed back, and a bitmap (that is, a bit sequence of 0s and 1s) with a length of $M_v'K_f$ may indicate coefficients in $M_v'K_f$ second weighting coefficients corresponding to the $K_1$ fed-back non-zero second weighting coefficients (that is, indicate locations of the non-zero second weighting coefficients in the second weighting coefficient matrix), where a bit corresponding to the fed-back second weighting coefficient is 1, and a remaining bit is 0. Specifically, the terminal device may send second indication information to the access network device. The second indication information includes a first bitmap and a second bitmap. The first bitmap indicates locations of the plurality of non-zero first weighting coefficients in the first weighting coefficient matrix, and the second bitmap indicates locations of the plurality of non-zero second weighting coefficients in the second weighting coefficient matrix.

In a possible implementation, to further reduce reporting overheads, normalization processing may be performed on the weighting coefficient to obtain an information bit of the weighting coefficient, and then the information bit is reported. For example, for a plurality of weighting coefficients corresponding to each spatial domain/frequency domain eigenbasis, an information bit of a weighting coefficient obtained by performing normalization processing on a maximum weighting coefficient corresponding to the spatial domain/frequency domain eigenbasis is reported. A normalized value of a maximum weighting coefficient corresponding to a spatial domain/frequency domain eigenbasis is 1. Therefore, during reporting, the maximum weighting coefficient for the spatial domain/frequency domain eigenbasis may no longer be reported, and only a location of the maximum weighting coefficient is reported in a bitmap.

For example, a first spatial domain eigenbasis is used as an example, and the first spatial domain eigenbasis is any one of the $K_s$ spatial domain eigenbases. An information bit of a non-zero first weighting coefficient corresponding to a first spatial domain eigenbasis in the first weighting coefficient matrix is obtained by normalizing, based on a maximum non-zero first weighting coefficient corresponding to the first spatial domain eigenbasis, a plurality of non-zero first weighting coefficients corresponding to the first spatial domain eigenbasis. Using a first frequency domain eigenbasis as an example, the first frequency domain eigenbasis is any one of the $K_f$ frequency domain eigenbases. An information bit of a non-zero second weighting coefficient corresponding to a first frequency domain eigenbasis in the second weighting coefficient matrix is obtained by normalizing, based on a maximum non-zero second weighting coefficient corresponding to the first frequency domain eigenbasis, a plurality of non-zero second weighting coefficients corresponding to the first frequency domain eigenbasis. When the first indication information is fed back, the first indication information includes information bits of a plurality of non-zero first weighting coefficients other than maximum non-zero first weighting coefficients respectively corresponding to the $K_s$ spatial domain eigenbases in the first weighting coefficient matrix, and information bits of a plurality of non-zero second weighting coefficients other than maximum non-zero second weighting coefficients respectively corresponding to the $K_f$ frequency domain eigenbases in the second weighting coefficient matrix. In this case, the maximum non-zero first weighting coefficients respectively corresponding to the $K_s$ spatial domain eigenbases are no longer fed back, and the maximum non-zero second weighting coefficients respectively corresponding to the $K_f$ frequency domain eigenbases are no longer fed back, so that feedback overheads can be further reduced.

In a possible implementation, the terminal device may indicate the 2L' spatial domain bases and the $M_v$' frequency domain bases to the access network device, or report indication information of the 2L' spatial domain bases and the $M_v$' frequency domain bases, for example, sequence numbers or another indication. For example, if the spatial domain basis set includes X spatial domain bases, the 2L' spatial domain bases are selected from the X spatial domain bases, and there are a plurality of combination manners. The terminal device may select a combination manner for reporting. For example, the 2L' spatial domain bases are indicated by reporting a sequence number of a spatial domain basis combination. For example, if the frequency domain basis set includes Y frequency domain bases, the $M_v$' frequency domain bases are selected from the Y frequency domain bases, and there are a plurality of combination manners. The terminal device may select a combination manner for reporting. For example, the $M_v$' frequency domain bases are indicated by reporting a sequence number of a frequency domain basis combination. Certainly, if the 2L' spatial domain bases and the $M_v$' frequency domain bases are agreed on in a protocol, the spatial domain bases and the frequency domain bases may not be reported. Alternatively, if the 2L' spatial domain bases are all spatial domain bases in the spatial domain basis set, and the $M_v$' frequency domain bases are all frequency domain bases in the frequency domain basis set, the terminal device may no longer report sequence numbers of the 2L' spatial domain bases and the $M_v$' frequency domain bases.

In a possible application scenario, the solution provided in the embodiment corresponding to FIG. 3 in this application may be applied to a scenario in which the access network device needs to obtain a space-frequency eigenbasis and a frequency domain eigenbasis. The access network device may perform some processing or configuration operations, or the like based on the obtained space-frequency eigenbasis and the obtained frequency domain eigenbasis. This is not limited in embodiments of this application.

In another possible application scenario, the solution provided in the embodiment corresponding to FIG. 3 in this application may be applied to a scenario in which the access network device needs to feed back channel state information.

In this scenario, the terminal device may feed back the first weighting coefficient matrix of the spatial domain eigenbasis and the second weighting coefficient matrix of the frequency domain eigenbasis to the access network device based on a long period. For example, the long period may be a first reporting period. The terminal device may feed back a third weighting coefficient matrix (which may also be referred to as a joint weighting coefficient matrix of a spatial domain eigenbasis and a frequency domain eigenbasis, for example, with reference to $C_2$ in the formula (1-6)) to the access network device based on a short period. A weighted sum of the third weighting coefficient matrix, the $K_s$ spatial domain eigenbases, and the $K_f$ frequency domain eigenbases is used to determine a precoding matrix, or a weighted sum of the third weighting coefficient matrix, the $K_s$ spatial domain eigenbases, and the $K_f$ frequency domain eigenbases is used to determine a channel matrix H. For example, the short period may be a second reporting period, and duration of the first reporting period is longer than duration of the second reporting period. The third weighting coefficient matrix may be understood as one third weighting coefficient matrix corresponding to each transport layer.

In some embodiments, the terminal device may report each third weighting coefficient based on a priority of each third weighting coefficient in the third weighting coefficient matrix corresponding to each transport layer. For example, the third weighting coefficient included in the third weighting coefficient matrix corresponding to each transport layer corresponds to one transport layer, one spatial domain eigenbasis, and one frequency domain eigenbasis. Each non-zero third weighting coefficient $C_2(l, k_s, k_f)$ Pril, $k_s$, $k_f$). A priority of the non-zero third weighting coefficient is related to a sequence number of a transport layer, a sequence number of a spatial domain eigenbasis, and a sequence number of a frequency domain eigenbasis that are associated with the non-zero third weighting coefficient.

For example, reporting priorities of a plurality of non-zero third weighting coefficients included in the third weighting coefficient matrix satisfy a formula (2-7).

$$Pri(l, k^1, k^2) = vK_s k^2 + vk^1 + l \quad \text{Formula (2-7)}$$

$l = 1,2, ...$ , or $v$, $k^2 = 0,1, ...$ , or $K_f$ - 1, and $k^1 = 0, 1, ...$ , or $K_s$ - 1.

In a possible implementation, it can be learned from the foregoing descriptions that, when a precoding matrix of $v$ transport layers are decomposed based on $K_s$ spatial domain eigenbases and $K_f$ frequency domain eigenbases, there are a total of $vk^1 k^2$ third weighting coefficients. In the $uk^1 k^2$ third weighting coefficients, amplitudes of a part of the coefficients may be extremely small, and close to 0 or equal to 0, and the part of the coefficients are considered as zero-value third weighting coefficients, and do not need to be fed back. In this case, only a part of non-zero third weighting coefficients (set to $K_3$ non-zero third weighting coefficients) may be fed back, and a bitmap (that is, a bit sequence of 0s and 1s) with a length of $vk^1 k^2$ may indicate coefficients in $vk^1 k^2$ third weighting coefficients corresponding to the fed-back $K_3$ non-zero third

weighting coefficients (that is, indicate locations of the non-zero third weighting coefficients in the third weighting coefficient matrix at a specific transport layer), where a bit corresponding to the fed-back third weighting coefficient is 1, and a remaining bit is 0.

FIG. 6 is a schematic flowchart of another basis feedback method according to an embodiment of this application. FIG. 6 is described from a perspective of feeding back a space-frequency eigenbasis. As shown in FIG. 6, the basis feedback method includes step 601 and step 602. The method shown in FIG. 6 may be performed by a terminal device and an access network device. Alternatively, the method shown in FIG. 6 may be performed by a chip in the terminal device and a chip in the access network device. In FIG. 6, an example in which the method is performed by the terminal device and the access network device is used for description.

601: The access network device sends a reference signal to the terminal device, and the terminal device receives the reference signal from the access network device. The reference signal is used by the terminal device to feed back a used space-frequency eigenbasis. The space-frequency eigenbasis is a non-DFT vector. For example, the reference signal may be a CSI-RS or a DMRS. It should be understood that the reference signal may alternatively be another signal that can be used by the terminal device to measure a channel. This is not limited in this application.

602: The terminal device sends fourth indication information to the access network device. The fourth indication information indicates a weighting coefficient matrix of the space-frequency eigenbasis. For ease of distinguishing, the weighting coefficient matrix of the space-frequency eigenbasis is referred to as a fourth weighting coefficient matrix, for example, $C_{sf}$. weighting coefficient in the fourth weighting coefficient matrix is referred to as a fourth weighting coefficient.

For example, the fourth indication information may alternatively be carried in CSI and reported to the access network device.

In an example, a quantity of space-frequency eigenbases is $K_{sf}$. understood that a value of $K_{sf}$ may be configured by the access network device by using signaling such as RRC, a MAC-CE, or DCI. Alternatively, a value of $K_{sf}$ may be agreed on in a protocol, or may be determined by the terminal device. This is not specifically limited in embodiments of this application.

The fourth weighting coefficient matrix may be understood as being obtained by decomposing each of the $K_{sf}$ space-frequency eigenbases based on $G_{sf}$ space-frequency bases. A weighted sum of the fourth weighting coefficient matrix and the $G_{sf}$ space-frequency bases is used to determine the $K_{sf}$ space-frequency eigenbases. Refer to the formula (1-10).

The $G_{sf}$ space-frequency bases are a part or all of $2L''M_{\upsilon}''$ space-frequency bases generated based on $2L''$ spatial domain bases and $M_{\upsilon}''$

A space-frequency basis set includes a plurality of space-frequency bases, and the $2L''M_{\upsilon}''$ basis set, or may be a part of space-frequency bases in the space-frequency basis set. The space-frequency basis in the space-frequency basis set may be obtained based on a linear combination of a spatial domain basis and a frequency domain basis, or may be obtained based on a Kronecker product of the spatial domain basis and the frequency domain basis. Therefore, the $2L''M_{\upsilon}''$ space-frequency bases may be obtained based on a linear combination of the $2L''$ spatial domain bases and the $M_{\upsilon}''$ $2L''$ spatial domain bases and the $M_{\upsilon}''$

In this application, a difference between a spatial domain basis and a space-frequency eigenbasis lies in that the space-frequency basis may be a DFT vector, a conjugate transpose vector of a DFT vector, or an over-sampled DFT vector. In this application, the space-frequency basis set may be configured by the access network device. For example, the access network device may configure the space-frequency basis set by using signaling such as RRC, MAC-CE, or DCI. Alternatively, the space-frequency basis set may be agreed on in a protocol. Signaling for configuring the space-frequency basis set and signaling for configuring the value of $K_{sf}$ may be same signaling, or may be different signaling.

For example, the fourth weighting coefficient matrix includes $2L''M_{\upsilon}''K_{sf}$ fourth weighting coefficients, each of the $2L''M_{\upsilon}''K_{sf}$ fourth weighting coefficients is associated with one of the $K_{sf}$ space-frequency eigenbases and one of the $2L''M_{\upsilon}''$ fourth weighting coefficient may be represented as $C_{sf}(i, f, k^3)$, $i$ of a spatial domain basis corresponding to the selected space-frequency basis, $f$ represents a sequence number of a frequency domain basis corresponding to the selected space-frequency basis, $k^3$ represents a sequence number of the space-frequency eigenbasis, $i = 0, 1, ...$ , or $2L''$ - 1, $f = 0, 1, ...$ , or $M_{\upsilon}''$ $k^3 = 0, 1, ...$ , or $K_{sf}$ - 1.

In this embodiment of this application, when the terminal device reports the fourth weighting coefficient matrix to the access network device, to reduce used reporting overheads, the terminal device may report only a non-zero fourth weighting coefficient in the fourth weighting coefficient matrix. Reporting rankings respectively corresponding to non-zero fourth weighting coefficients in the fourth weighting coefficient matrix may be determined based on reporting priorities. The reporting priority may be positively correlated with the reporting ranking, that is, a non-zero fourth weighting coefficient with a higher reporting priority is reported earlier.

Reporting priorities of a plurality of non-zero fourth weighting coefficients included in the fourth weighting coefficient matrix are related to sequence numbers of space-frequency bases associated with the non-zero fourth weighting coefficients and sequence numbers of space-frequency eigenbases associated with the non-zero fourth weighting coefficients. It may be understood that each non-zero fourth weighting coefficient is associated with one reporting priority, and the reporting priority of the non-zero fourth weighting coefficient may be represented as $Pri_{sf}(i, f, k^3)$.

In an example, the reporting priorities of the plurality of non-zero weighting coefficients included in the fourth weighting coefficient matrix satisfy a formula (3-1) or a formula (3-2).

$$Pri_{sf}(i, f, k^3) = 2L''k^3\pi'(f) + 2L''k^3 + i \quad \text{Formula (3-1)}$$

$$Pri(i, f, k^3) = 2L''N_3k^3 + 2L''\pi'(f) + i \, \text{Formula (3-2)}$$

$\pi'(f) = min\left(2 \cdot n_3^{(f)}, 2 \cdot \left(N_3 - n_3^{(f)}\right) - 1\right)$ , $i$ represents a sequence number of a spatial domain basis corresponding to the selected space-frequency basis, $f$ represents a sequence number of a frequency domain basis corresponding to the selected space-frequency basis, $k^3$ represents a sequence number of the space-frequency eigenbasis, $i$ = 0,1, ..., or 2L" - 1, $f$ = 0,1, ..., or $M_v''$ - 1, $k^3$ = 0,1, ..., or $K_{sf}$ - 1, $Pri(i, f, k^3)$ weighting coefficient associated with the frequency domain basis with the sequence number f, the space-frequency eigenbasis with the sequence number $k^3$, and the spatial domain basis with the sequence number i, $N_3$ represents a total quantity of frequency domain bases, and

$n_3^{(f)}$ represents a sequence number of the frequency domain basis with the sequence number $f$ in the $N_3$ frequency domain bases.

In some embodiments, the non-zero fourth weighting coefficient may also be reported in a grouping manner. For example, the non-zero fourth weighting coefficients are grouped into N information bit groups. The fourth indication information includes at least J information bit groups in the N information bit groups, where N is a positive integer, and J is a positive integer less than or equal to N.

Example 4: Grouping may be performed based on a sequence number of a space-frequency eigenbasis.

An $n^{th}$ information bit group in the N information bit groups includes information bits of non-zero first weighting coefficients corresponding to $K_{sfn}$ space-frequency eigenbases, where $\sum_{n=1}^{N} K_{sfn} = K_{sf}$ .

Quantities of space-frequency eigenbases included in the information bit groups may be the same or may be different.

For example, the information bits of the non-zero fourth weighting coefficients may be evenly allocated to the N information bit groups based on a quantity of space-frequency eigenbases. When n=1, 2, ..., or N-1, $K_{sfn} = \lceil K_{sf}/N \rceil$ ,

or when n=N, $K_{sfn} = K_{sf} - (N-1)\lceil K_{sf}/N \rceil$ . Alternatively, when n=1, 2, ..., or N-1, $K_{sfn} = \lfloor K_{sf}/N \rfloor$ , or

when n=N, $K_{sfn} = K_{sf} - (N-1)\lfloor K_{sf}/N \rfloor$ .

Example 5: Grouping may be performed based on a value of a reporting priority.

An $n^{th}$ information bit group in the N information bit groups includes information bits of $N_{sfn}$ non-zero fourth weighting coefficients, where $\sum_{n=1}^{N} N_{sfn} = N_{sf}$ , and $N_{sf}$ represents a total quantity of non-zero fourth weighting coefficients included in the fourth weighting coefficient matrix.

For example, the information bits of the non-zero fourth weighting coefficients may be evenly allocated to the N information bit groups based on a quantity of non-zero fourth weighting coefficients. When n=1, 2, ..., or N-1,

$N_{sfn} = \lceil N_{sf}/N \rceil$ , or when n=N, $N_{sfn} = N_{sfn} - (N-1)\lceil N_{sf}/N \rceil$ .

In a possible implementation, when a quantity of reporting resources of the terminal device is insufficient, one information bit group or several information bit group coefficients with a lower ranking may be discarded, or information bits in an information bit group with a lower ranking in group sorting may be discarded, until an overhead limitation is satisfied.

For example, when a quantity of reporting resources of the terminal device is greater than or equal to a quantity of resources of the N information bit groups, the N information bit groups are sent to the access network device. For another example, when a quantity of reporting resources of the terminal device is less than a quantity of resources of the N information bit groups, a 1st information bit group to a $J^{th}$ information bit group in the N information bit groups are sent to the access network device based on the quantity of reporting resources. For still another example, when a quantity of reporting resources of the terminal device is less than a quantity of resources of the N information bit groups, a 1st information bit

group to a $J^{th}$ information bit group and a part of information bits in a $(J+1)^{th}$ information bit group are sent to the access network device based on the quantity of reporting resources.

For another example, sorting is performed based on the reporting priorities, and when reporting resources are insufficient, a coefficient with a priority with a lower ranking is discarded. Specifically, when a quantity of reporting resources of the terminal device is less than a quantity of resources of information bits of the non-zero fourth weighting coefficients in the fourth weighting coefficient matrix, information bits of a part of the non-zero fourth weighting coefficients in the fourth weighting coefficient matrix are sent to the access network device based on the quantity of reporting resources, where a quantity of resources of the information bits of the part of the non-zero fourth weighting coefficients satisfies the quantity of reporting resources of the terminal device, and reporting priorities of the part of the non-zero fourth weighting coefficients are all higher than a reporting priority of a non-zero fourth weighting coefficient other than the part of the non-zero fourth weighting coefficients in the fourth weighting coefficient matrix.

For another example, sorting is performed based on sequence numbers of the space-frequency eigenbases, and when reporting resources are insufficient, a coefficient corresponding to a space-frequency eigenbasis with a lower ranking is discarded. Specifically, when a quantity of reporting resources of the terminal device is less than a quantity of resources of information bits of the non-zero fourth weighting coefficients in the fourth weighting coefficient matrix, information bits of non-zero fourth weighting coefficients corresponding to a part of the space-frequency eigenbases in the fourth weighting coefficient matrix are sent to the access network device based on the quantity of reporting resources, where the part of the space-frequency eigenbases are space-frequency eigenbases whose sequence numbers are less than g in the $K_{sfn}$ space-frequency eigenbases.

In a possible implementation, it can be learned from the foregoing descriptions that when the $K_{sf}$ spatial domain eigenbases are separately decomposed based on $2L''M_\upsilon''$-frequency bases, there are a total of $2L''M_\upsilon''K_{sf}$ fourth weighting coefficients. In the $2L''M_\upsilon''K_{sf}$ fourth weighting coefficients, amplitudes of a part of coefficients may be extremely small, and close to 0 or equal to 0, and the part of the coefficients are considered as zero-value fourth weighting coefficients, and do not need to be fed back. In this case, only a part of non-zero fourth weighting coefficients (set to $K_4$ non-zero fourth weighting coefficients) may be fed back, and a bitmap (that is, a bit sequence of 0s and 1s) with a length of $2L''M_\upsilon''K_{sf}$ may indicate coefficients in $2L''M_\upsilon''K_{sf}$ fourth weighting coefficients corresponding to the $K_4$ fed-back non-zero fourth weighting coefficients (that is, indicate locations of the non-zero fourth weighting coefficients in the fourth weighting coefficient matrix), where a bit corresponding to the fed-back fourth weighting coefficient is 1, and a remaining bit is 0.

In a possible implementation, the terminal device may indicate the $2L''$ spatial domain bases and the $M_\upsilon''$ information of the $2L''$ spatial domain bases and the $M_\upsilon''$ sequence numbers or another indication. For example, if the spatial domain basis set includes X spatial domain bases, the $2L''$ spatial domain bases are selected from the X spatial domain bases, and there are a plurality of combination manners. The terminal device may select a combination manner for reporting. For example, the $2L''$ spatial domain bases are indicated by reporting a sequence number of a spatial domain basis combination. For example, if the frequency domain basis set includes Y frequency domain bases, the $M_\upsilon''$ the Y frequency domain bases, and there are a plurality of combination manners. The terminal device may select a combination manner for reporting. For example, the $M_\upsilon''$ bases are indicated by reporting a sequence number of a frequency domain basis combination. Certainly, if the $2L''M_\upsilon''$ bases may not be reported. Alternatively, the $2L''$ spatial domain bases are all spatial domain bases in the spatial domain basis set, and the $M_\upsilon''$ domain bases in the frequency domain basis set. The $2L''M_\upsilon''$ through processing, and the terminal device may no longer report sequence numbers of the $2L''M_\upsilon''$

In some embodiments, the terminal device may further indicate $G_{sf}$ space-frequency bases in the $2L''M_\upsilon''$ numbers, a bitmap, or a sequence number of a combination of the $G_{sf}$ space-frequency bases. In some other embodiments, when the $2L''M_\upsilon''$ space-frequency basis set, the $G_{sf}$ space-frequency bases may alternatively be directly selected from the $2L''M_\upsilon''$ a plurality of combination manners of selecting the $G_{sf}$ space-frequency bases from the $2L''M_\upsilon''$ space-frequency bases, and a sequence number of the combination is reported.

In a possible application scenario, the solution provided in the embodiment corresponding to FIG. 6 in this application may be applied to a scenario in which the access network device needs to obtain a space-frequency eigenbasis. The access network device may perform some processing or configuration operations, or the like based on the obtained space-frequency eigenbasis. This is not limited in embodiments of this application.

In another possible application scenario, the solution provided in the embodiment corresponding to FIG. 6 in this application may be applied to a scenario in which the access network device needs to feed back channel state information.

In this scenario, the terminal device may feed back the fourth weighting coefficient matrix of the space-frequency eigenbasis to the access network device based on a long period. For example, the long period may be a first reporting period. The terminal device may feed back a fifth weighting coefficient matrix to the access network device based on a short period. For example, with reference to $C_3$ in the formula (1-7), a weighted sum of the fifth weighting coefficient matrix and the $K_{sf}$ space-frequency eigenbases is used to determine a precoding matrix, or a weighted sum of the fifth weighting coefficient matrix and the $K_{sf}$ space-frequency eigenbases is used to determine a channel matrix H. For example, the short period may be a second reporting period, and duration of the first reporting period is longer than duration of the second reporting period. The fifth weighting coefficient matrix may be understood as one fifth weighting coefficient matrix corresponding to each transport layer.

In some embodiments, the terminal device may report each fifth weighting coefficient based on a priority of each fifth weighting coefficient in the fifth weighting coefficient matrix corresponding to each transport layer. For example, the fifth weighting coefficient included in the fifth weighting coefficient matrix corresponding to each transport layer corresponds to one transport layer and one space-frequency eigenbasis. Each non-zero fifth weighting coefficient $C_3(l, k^3)$ $Pri(l, k^3)$. A priority of the non-zero fifth weighting coefficient is related to a sequence number of a transport layer and a sequence number of a space-frequency eigenbasis that are associated with the non-zero fifth weighting coefficient.

For example, reporting priorities of a plurality of non-zero fifth weighting coefficients included in the fifth weighting coefficient matrix satisfy a formula (3-3).

$$Pri(l, k^3) = \upsilon k^3 + l \quad \text{Formula (3-3)}$$

$l$ = 1, 2, ..., or $\upsilon$, and $k^3$ = 0, 1, ..., or $K_{sf}$ -

In this application, when a spatial domain eigenbasis and a frequency domain eigenbasis (or a space-frequency eigenbasis) are reported, the spatial domain eigenbasis and the frequency domain eigenbasis are decomposed based on a spatial domain basis and a frequency domain basis (or the space-frequency eigenbasis is decomposed based on a space-frequency basis); the spatial domain eigenbasis and the frequency domain eigenbasis (or the space-frequency eigenbasis) are respectively indicated by reporting weighting coefficients obtained through decomposition; and a reporting priority of the weighting coefficient is associated with a sequence number of a spatial domain basis, a sequence number of a frequency domain basis, a sequence number of a spatial domain eigenbasis, and a sequence number of a frequency domain eigenbasis. In addition, in this application, it is ensured as much as possible that a coefficient with a larger amplitude has a higher priority, that is, the coefficient is preferentially fed back, and a coefficient with a smaller amplitude is preferentially discarded, to ensure reporting precision and improve system performance.

In the foregoing embodiments provided in this application, the method provided in embodiments of this application is described from a perspective of interaction between the devices. To implement functions in the method provided in embodiments of this application, the access network device or the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular application and design constraints of the technical solutions.

In embodiments of this application, module division is an example, and is merely a logical function division. In an actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

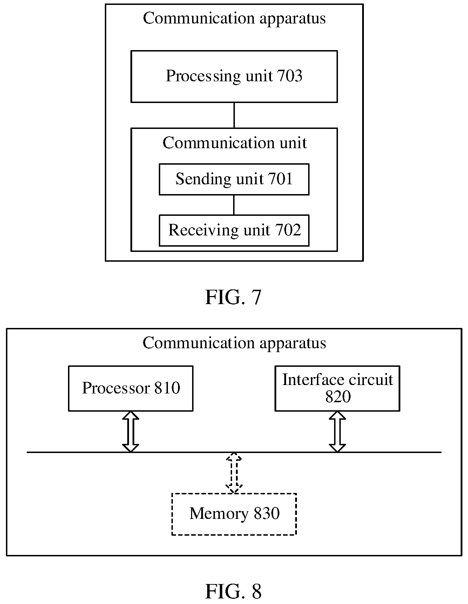

The same as the foregoing concept, as shown in FIG. 7, an embodiment of this application further provides a communication apparatus, configured to implement a function of the access network device or the terminal device in the foregoing method. For example, the apparatus may be a software module or a chip system. In this embodiment of this application, the chip system may include a chip, or may include a chip and another discrete component. The communication apparatus 700 may include a sending unit 701 and a receiving unit 702. The communication apparatus 700 may further include a processing unit 703. The sending unit 701 and the receiving unit 702 may also be collectively referred to as a communication unit.

In this embodiment of this application, the communication unit may also be referred to as a transceiver unit, and is separately configured to perform sending and receiving steps of the access network device or the terminal device in the foregoing method embodiments.

The following describes in detail communication apparatuses provided in embodiments of this application with reference to FIG. 7 and FIG. 8. It should be understood that descriptions of apparatus embodiments correspond to the descriptions of the method embodiments. Therefore, for content that is not described in detail, refer to the foregoing method embodiments. For brevity, details are not described herein again.

The communication unit may also be referred to as an interface circuit, a transceiver machine, a transceiver apparatus, or the like. The processing unit may also be referred to as a processor, a processing board, a processing module, a processing apparatus, or the like. Optionally, a component that is in the communication unit and that is configured to implement a receiving function may be considered as a receiving unit, and a component that is in the communication unit and that is configured to implement a sending function may be considered as a sending unit. That is, the communication unit includes the receiving unit 702 and the sending unit 701. The communication unit sometimes may also be referred to as a transceiver machine, an interface circuit, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus implements the function of the terminal device, in a possible application scenario,

the receiving unit 702 receives a reference signal from an access network device, where the reference signal indicates the terminal device to feed back a used spatial domain eigenbasis and a used frequency domain eigenbasis; and the sending unit 701 sends first indication information to the access network device, where the first indication information indicates a first weighting coefficient matrix and a second weighting coefficient matrix, where a weighted sum of the first weighting coefficient matrix and $2L'$ spatial domain bases in a spatial domain basis set is used to determine $K_s$ spatial domain eigenbases, and a weighted sum of the second weighting coefficient matrix and $M_v'$ frequency domain bases in a frequency domain basis set is used to determine $K_f$ frequency domain eigenbases; and reporting priorities of a plurality of non-zero first weighting coefficients in the first weighting coefficient matrix are related to sequence numbers of spatial domain bases associated with the non-zero first weighting coefficients and sequence numbers of spatial domain eigenbases associated with the non-zero first weighting coefficients, and reporting priorities of a plurality of non-zero second weighting coefficients in the second weighting coefficient matrix are related to sequence numbers of frequency domain bases associated with the non-zero second weighting coefficients and sequence numbers of frequency domain eigenbases associated with the non-zero second weighting coefficients.

In some embodiments, the processing unit 703 is configured to control the communication unit (the sending unit 701) to send the first indication information to the access network device.

In a possible implementation, the sending unit 701 is configured to: when a quantity of reporting resources of the terminal device is greater than or equal to a quantity of resources of the N information bit groups, send the N information bit groups to the access network device; or when a quantity of reporting resources of the terminal device is less than a quantity of resources of the N information bit groups, send a 1st information bit group to a Jth information bit group in the N information bit groups to the access network device based on the quantity of reporting resources; or when a quantity of reporting resources of the terminal device is less than a quantity of resources of the N information bit groups, send a 1st information bit group to a Jth information bit group and a part of information bits in a (J+1)th information bit group to the access network device based on the quantity of reporting resources.

In a possible implementation, the sending unit 701 sends second indication information to the access network device, where the second indication information includes a first bitmap and a second bitmap, where the first bitmap indicates locations of the plurality of non-zero first weighting coefficients in the first weighting coefficient matrix, and the second bitmap indicates locations of the plurality of non-zero second weighting coefficients in the second weighting coefficient matrix.

In a possible implementation, the sending unit 701 periodically sends the first indication information to the access network device based on a first reporting period; and periodically sends third indication information to the access network device based on a second reporting period, where the third indication information indicates a third weighting coefficient matrix, where a weighted sum of the third weighting coefficient matrix, the $K_s$ spatial domain eigenbases, and the $K_f$ frequency domain eigenbases is used to determine a precoding matrix; and the first reporting period is longer than the second reporting period.

When the communication apparatus implements the function of the terminal device, in another possible application scenario,

the receiving unit 702 receives a reference signal from an access network device, where the reference signal indicates the terminal device to feed back a used space-frequency eigenbasis; and
the sending unit 701 sends fourth indication information to the access network device, where the fourth indication information indicates a fourth weighting coefficient matrix, where
a weighted sum of the fourth weighting coefficient matrix and $G_{sf}$ space-frequency bases is used to determine $K_{sf}$ space-frequency eigenbases, and reporting priorities of a plurality of non-zero fourth weighting coefficients included in the fourth weighting coefficient matrix are related to sequence numbers of space-frequency bases associated with the non-zero fourth weighting coefficients and sequence numbers of space-frequency eigenbases associated with the non-zero fourth weighting coefficients.

In a possible implementation, the sending unit 701 is configured to: when a quantity of reporting resources of the terminal device is greater than or equal to a quantity of resources of the N information bit groups, send the N information bit groups to the access network device; or when a quantity of reporting resources of the terminal device is less than a quantity of resources of the N information bit groups, send a 1st information bit group to a Jth information bit group in the N information bit groups to the access network device based on the quantity of reporting resources; or when a quantity of reporting resources of the terminal device is less than a quantity of resources of the N information bit groups, send a $1^{st}$ information bit group to a $J^{th}$ information bit group and a part of information bits in a $(J+1)^{th}$ information bit group to the access network device based on the quantity of reporting resources.

In a possible implementation, the sending unit 701 is configured to: when a quantity of reporting resources of the terminal device is less than a quantity of resources of information bits of the non-zero fourth weighting coefficients in the fourth weighting coefficient matrix, send information bits of a part of the non-zero fourth weighting coefficients in the fourth weighting coefficient matrix to the access network device based on the quantity of reporting resources, where a quantity of resources of the information bits of the part of the non-zero fourth weighting coefficients satisfies the quantity of reporting resources of the terminal device, and reporting priorities of the part of the non-zero fourth weighting coefficients are all higher than a reporting priority of a non-zero fourth weighting coefficient other than the part of the non-zero fourth weighting coefficients in the fourth weighting coefficient matrix; or

when a quantity of reporting resources of the terminal device is less than a quantity of resources of information bits of the non-zero fourth weighting coefficients in the fourth weighting coefficient matrix, send, to the access network device based on the quantity of reporting resources, information bits of non-zero fourth weighting coefficients corresponding to a part of the space-frequency eigenbases in the fourth weighting coefficient matrix, where the part of the space-frequency eigenbases are space-frequency eigenbases whose sequence numbers are less than g in the $K_{sfn}$ space-frequency eigenbases.

In a possible implementation, the sending unit 701 periodically sends the fourth indication information to the access network device based on a first reporting period; and periodically sends fifth indication information to the access network device based on a second reporting period, where the fifth indication information indicates a fifth weighting coefficient matrix, where a weighted sum of the fifth weighting coefficient matrix and the $K_{sf}$ space-frequency eigenbases is used to determine a precoding matrix; and the first reporting period is longer than the second reporting period.

When the communication apparatus implements the function of the access network device, in a possible application scenario,

the sending unit 701 sends a reference signal to a terminal device, where the reference signal indicates the terminal device to feed back a used spatial domain eigenbasis and a used frequency domain eigenbasis; and
the receiving unit 702 receives first indication information from the terminal device, where the first indication information indicates a first weighting coefficient matrix and a second weighting coefficient matrix, where
a weighted sum of the first weighting coefficient matrix and $2L'$ spatial domain bases in a spatial domain basis set is used to determine $K_s$ spatial domain eigenbases, and a weighted sum of the second weighting coefficient matrix and $M_v'$ frequency domain bases in a frequency domain basis set is used to determine $K_f$ frequency domain eigenbases; and reporting priorities of a plurality of non-zero first weighting coefficients in the first weighting coefficient matrix are related to sequence numbers of spatial domain bases associated with the non-zero first weighting coefficients and sequence numbers of spatial domain eigenbases associated with the non-zero first weighting coefficients, and reporting priorities of a plurality of non-zero second weighting coefficients in the second weighting coefficient matrix are related to sequence numbers of frequency domain bases associated with the non-zero second weighting coefficients and sequence numbers of frequency domain eigenbases associated with the non-zero second weighting coefficients.

In a possible implementation, the receiving unit 702 is configured to: when a quantity of reporting resources of the terminal device is greater than or equal to a quantity of resources of the N information bit groups, receive the N information bit groups from the terminal device; or when a quantity of reporting resources of the terminal device is less than a quantity of resources of the N information bit groups, receive a $1^{st}$ information bit group to a $J^{th}$ information bit group in the N information bit groups from the terminal device; or when a quantity of reporting resources of the terminal device is less than a quantity of resources of the N information bit groups, receive a $1^{st}$ information bit group to a $J^{th}$ information bit group and a part of information bits in a $(J+1)^{th}$ information bit group from the terminal device.

In a possible implementation, the receiving unit 702 receives second indication information from the terminal device, where the second indication information includes a first bitmap and a second bitmap, where the first bitmap indicates locations of the plurality of non-zero first weighting coefficients in the first weighting coefficient matrix, and the second bitmap indicates locations of the plurality of non-zero second weighting coefficients in the second weighting coefficient matrix.

In a possible implementation, the receiving unit 702 periodically receives the first indication information from the terminal device based on a first reporting period; and periodically receives third indication information from the terminal device based on a second reporting period, where the third indication information indicates a third weighting coefficient matrix, where a weighted sum of the third weighting coefficient matrix, the $K_s$ spatial domain eigenbases, and the $K_f$ frequency domain eigenbases is used to determine a precoding matrix; and the first reporting period is longer than the second reporting period.

When the communication apparatus implements the function of the access network device, in another possible application scenario,

the sending unit 701 sends a reference signal to a terminal device, where the reference signal indicates the terminal device to feed back a used space-frequency eigenbasis; and

the receiving unit 702 receives fourth indication information from the terminal device, where the fourth indication information indicates a fourth weighting coefficient matrix, where a weighted sum of the fourth weighting coefficient matrix and $G_{sf}$ space-frequency bases is used to determine $K_{sf}$ space-frequency eigenbases, and reporting priorities of a plurality of non-zero fourth weighting coefficients included in the fourth weighting coefficient matrix are related to sequence numbers of space-frequency bases associated with the non-zero fourth weighting coefficients and sequence numbers of space-frequency eigenbases associated with the non-zero fourth weighting coefficients.

In a possible implementation, the receiving unit 702 is configured to: when a quantity of reporting resources of the terminal device is greater than or equal to a quantity of resources of the N information bit groups, receive the N information bit groups from the terminal device; or when a quantity of reporting resources of the terminal device is less than a quantity of resources of the N information bit groups, receive a 1st information bit group to a Jth information bit group in the N information bit groups from the terminal device; or when a quantity of reporting resources of the terminal device is less than a quantity of resources of the N information bit groups, receive a 1st information bit group to a Jth information bit group and a part of information bits in a $(J+1)^{d1}$ information bit group from the terminal device.

In a possible implementation, the receiving unit 702 is configured to: when a quantity of reporting resources of the terminal device is less than a quantity of resources of information bits of the non-zero fourth weighting coefficients in the fourth weighting coefficient matrix, receive information bits of a part of the non-zero fourth weighting coefficients in the fourth weighting coefficient matrix from the terminal device, where a quantity of resources of the information bits of the part of the non-zero fourth weighting coefficients satisfies the quantity of reporting resources of the terminal device, and reporting priorities of the part of the non-zero fourth weighting coefficients are all higher than a reporting priority of a non-zero fourth weighting coefficient other than the part of the non-zero fourth weighting coefficients in the fourth weighting coefficient matrix; or when a quantity of reporting resources of the terminal device is less than a quantity of resources of information bits of the non-zero fourth weighting coefficients in the fourth weighting coefficient matrix, receive information bits of non-zero fourth weighting coefficients corresponding to a part of the space-frequency eigenbases in the fourth weighting coefficient matrix from the terminal device, where the part of the space-frequency eigenbases are space-frequency eigenbases whose sequence numbers are less than g in the $K_{sfn}$ space-frequency eigenbases.

In a possible implementation, the receiving unit 702 periodically receives the fourth indication information from the terminal device based on a first reporting period; and periodically receives fifth indication information from the terminal device based on a second reporting period, where the fifth indication information indicates a fifth weighting coefficient matrix, where a weighted sum of the fifth weighting coefficient matrix and the $K_{sf}$ space-frequency eigenbases is used to determine a precoding matrix; and the first reporting period is longer than the second reporting period.

The foregoing is merely an example. The processing unit 703 and the communication unit (the sending unit 701 and/or the receiving unit 702) may further perform other functions. For more detailed descriptions, refer to related descriptions in the embodiments shown in FIG. 3 and FIG. 6. Details are not described herein again.

FIG. 8 is a diagram of a communication apparatus according to an embodiment of this application. The apparatus shown in FIG. 8 may be an implementation of a hardware circuit of the apparatus shown in FIG. 7. The communication apparatus is applicable to the flowchart shown above, and performs a function of the terminal device or the access network device in the foregoing method embodiments. For ease of description, FIG. 8 shows only main components of the communication apparatus.

As shown in FIG. 8, the communication apparatus 800 includes a processor 810 and an interface circuit 820. The processor 810 and the interface circuit 820 are coupled to each other. It may be understood that the interface circuit 820 may be an interface circuit, a pin, an interface circuit, or an input/output interface. Optionally, the communication apparatus 800 may further include a memory 830, configured to: store instructions executed by the processor 810, or store input data needed by the processor 810 to run the instructions, or store data generated after the processor 810 runs the instructions. The interface circuit may also be referred to as a transceiver machine, a transceiver, an input/output circuit, a transceiver circuit, or the like.

When the communication apparatus 800 is configured to implement the method shown in FIG. 3, the processor 810 is configured to implement a function of the processing unit 703, and the interface circuit 820 is configured to implement a function of the communication unit.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

When the communication apparatus is a chip used in an access network device, the chip in the access network device implements the function of the access network device in the foregoing method embodiments. The chip in the access network device receives information from another module (for example, a radio frequency module or an antenna) in the access network device, where the information is sent by a terminal device to the access network device. Alternatively, the chip in the access network device sends information to another module (for example, a radio frequency module or an antenna) in the access network device, where the information is sent by the access network device to a terminal device.

It may be understood that, the processor in embodiments of this application may be a central processing unit, or may be another general-purpose processor, a digital signal processor, an application-specific integrated circuit or another programmable logic device, a transistor logic device, a hardware component, or any combination thereof. The general-purpose processor may be a microprocessor or any regular processor or the like.

The memory in embodiments of this application may be a random access memory, a flash memory, a read-only memory, a programmable read-only memory, an erasable programmable read-only memory, an electrically erasable programmable read-only memory, a register, a hard disk drive, a removable hard disk drive, or any other form of storage medium well-known in the art.

An embodiment of this application provides a communication system. The communication system includes the foregoing terminal device and the foregoing access network device.

It may be clearly understood by a person skilled in the art that, for the purpose of convenient and brief description, for a specific working process of the communication system described above, refer to a corresponding process in the foregoing method embodiments. Details are not described herein again.

An embodiment of this application provides a computer-readable medium, configured to store a computer program. The computer program includes instructions used to perform the steps in the method in the method embodiment corresponding to FIG. 3 or FIG. 6.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or the block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope of the claims of this application and their equivalent technologies.

**Claims**

1. A basis feedback method, comprising:

receiving a reference signal from an access network device, wherein the reference signal indicates a terminal device to feed back a used spatial domain eigenbasis and a used frequency domain eigenbasis; and
sending first indication information to the access network device, wherein the first indication information indicates a first weighting coefficient matrix and a second weighting coefficient matrix, wherein
a weighted sum of the first weighting coefficient matrix and $2L'$ spatial domain bases in a spatial domain basis set is used to determine $K_s$ spatial domain eigenbases, and a weighted sum of the second weighting coefficient matrix and $M_v'$ frequency domain bases in a frequency domain basis set is used to determine $K_f$ frequency domain eigenbases; and
reporting priorities of a plurality of non-zero first weighting coefficients in the first weighting coefficient matrix are related to sequence numbers of spatial domain bases associated with the non-zero first weighting coefficients and sequence numbers of spatial domain eigenbases associated with the non-zero first weighting coefficients, and reporting priorities of a plurality of non-zero second weighting coefficients in the second weighting coefficient matrix are related to sequence numbers of frequency domain bases associated with the non-zero second weighting coefficients and sequence numbers of frequency domain eigenbases associated with the non-zero second weighting coefficients.

2. The method according to claim 1, wherein the first indication information comprises at least J information bit groups in N information bit groups, wherein N is a positive integer, and J is a positive integer less than or equal to N; and

an $n^{th}$ information bit group in the N information bit groups comprises information bits of non-zero first weighting coefficients corresponding to $K_{sn}$ spatial domain eigenbases and information bits of non-zero second weighting coefficients corresponding to $K_{fn}$ spatial domain eigenbases, wherein $\sum_{n=1}^{N} K_{sn} = K_s$ , and $\sum_{n=1}^{N} K_{fn} = K_f$ ; or

an $n^{th}$ information bit group in the N information bit groups comprises information bits of non-zero first weighting coefficients corresponding to $l_n$ spatial domain bases and information bits of non-zero second weighting coefficients corresponding to $m_n$ spatial domain eigenbases, wherein $\sum_{n=1}^{N} l_n = 2L'$ , and $\sum_{n=1}^{N} m_n = M_v'$ ; or

an $n^{th}$ information bit group in the N information bit groups comprises information bits of $N_{sn}$ non-zero first weighting coefficients and information bits of $N_{fn}$ non-zero second weighting coefficients, wherein $\sum_{n=1}^{N} N_{sn} = N_s$ , and $\sum_{n=1}^{N} N_{fn} = N_f$ ; or $\sum_{n=1}^{N} N_{sn} = N_s - K_s$ , and $\sum_{n=1}^{N} N_{fn} = N_f - K_f$ ; $N_s$ represents a total quantity of non-zero weighting coefficients comprised in the first weighting coefficient matrix; and $N_f$ represents a total quantity of non-zero weighting coefficients comprised in the second weighting coefficient matrix.

3. The method according to claim 2, wherein

when n=1, 2, ..., or N-1, $K_{sn} = \lceil K_s/N \rceil$ , and $K_{fn} = \lceil K_f/N \rceil$ , or when n=N, $K_{sn} = K_s - (N-1)\lceil K_s/N \rceil$ , and $K_{fn} = K_f - (N-1)\lceil K_f/N \rceil$ ; or

when n=1, 2, ..., or N-1, $l_n = \lceil 2L'/N \rceil$ , and $m_n = \lceil M_v/N \rceil$ , or when n=N, $l_n = 2L' - (N-1)\lceil 2L'/N \rceil$ , and $m_n = M_v' - (N-1)\lceil M_v'/N \rceil$ ; or

when n=1, 2, ..., or N-1, $N_{sn} = \lceil N_s/N \rceil$ , and $N_{fn} = \lceil N_f/N \rceil$ , or when n=N, $N_{sn} = N_s - (N-1)\lceil N_s/N \rceil$ , and $N_{fn} = N_f - (N-1)\lceil N_f/N \rceil$ .

4. The method according to claim 2 or 3, wherein each of the N information bit groups comprises one spatial domain information bit group and one frequency domain information bit group, and a reporting priority of the spatial domain information bit group in each information bit group is higher than a reporting priority of the frequency domain information bit group in the information bit group, or a reporting priority of the frequency domain information bit group in each information bit group is higher than a reporting priority of the spatial domain information bit group in each information bit group; and

an $n^{th}$ spatial domain information bit group comprises the information bits of the non-zero first weighting coefficients corresponding to the $K_{sn}$ spatial domain eigenbases, and an $n^{th}$ frequency domain information bit group comprises information bits of non-zero second weighting coefficients corresponding to $K_{fn}$ frequency domain eigenbases; or

an $n^{th}$ spatial domain information bit group comprises the information bits of the non-zero first weighting coefficients corresponding to the $l_n$ spatial domain bases, and an $n^{th}$ frequency domain information bit group comprises the information bits of the non-zero second weighting coefficients corresponding to the $m_n$ spatial domain eigenbases; or

an $n^{th}$ spatial domain information bit group comprises the information bits of the $N_{sn}$ non-zero first weighting coefficients, and an $n^{th}$ frequency domain information bit group comprises the information bits of the $N_{fn}$ non-zero second weighting coefficients.

5. The method according to any one of claims 2 to 4, wherein sending the first indication information to the access network device comprises:

when a quantity of reporting resources of the terminal device is greater than or equal to a quantity of resources of the N information bit groups, sending the N information bit groups to the access network device; or
when a quantity of reporting resources of the terminal device is less than a quantity of resources of the N information bit groups, sending a 1st information bit group to the $J^{th}$ information bit group in the N information bit groups to the access network device based on the quantity of reporting resources; or
when a quantity of reporting resources of the terminal device is less than a quantity of resources of the N information bit groups, sending a 1st information bit group to a $J^{th}$ information bit group and a part of information bits in a $(J+1)^{th}$ information bit group to the access network device based on the quantity of reporting resources.

6. The method according to any one of claims 1 to 5, wherein the reporting priorities of the plurality of non-zero first weighting coefficients comprised in the first weighting coefficient matrix satisfy:

$$Pri_s(i, k^1) = 2L'k^1 + i;$$

or

$$Pri_s(i, k^1) = K_s i + k^1,$$

wherein
i represents a sequence number of the selected spatial domain basis, $k^1$ represents a sequence number of the spatial domain eigenbasis, $i = 0,1, ...,$ or $2L' - 1$, $k^1 = 0, 1, ...,$ or $K_s-1$, and $Pri_s(i, k^1)$ represents a priority of a non-zero first weighting coefficient associated with the spatial domain basis with the sequence number i and the spatial domain eigenbasis with the sequence number k.

7. The method according to any one of claims 1 to 6, wherein the reporting priorities of the plurality of non-zero second weighting coefficients comprised in the second weighting coefficient matrix satisfy:

$$Pri_f(f, k^2) = M_v'k^2 + \pi'(f);$$

or

$$Pri_f(f, k^2) = K_f \pi'(f) + k^2;$$

or

$$Pri_f(f, k^2) = M_v'k^2 + f;$$

or

$$Pri_f(f, k^2) = K_f f + k^2,$$

wherein

$$\pi'(f) = min\left(2 \cdot n_3^{(f)}, 2 \cdot \left(N_3 - n_3^{(f)}\right) - 1\right),$$

$f$ represents a sequence number of the selected frequency domain basis, $k2$ represents a sequence number of the frequency domain eigenbasis, $f = 0, 1, ...,$ or $M_v$ - 1, $k2 = 0, 1, ...,$ or $K_f$ - 1, $Pri_f(f, k2)$ represents a priority of a non-zero second weighting coefficient associated with the frequency domain basis with the sequence number $f$ and the frequency domain eigenbasis with the sequence number $k2$, $N_3$ represents a total quantity of frequency domain bases, and $n_3^{(f)}$ represents a sequence number of the frequency domain basis with the sequence number $f$ in the $N_3$ frequency domain bases.

8. The method according to any one of claims 1 to 7, wherein the method further comprises:

sending second indication information to the access network device, wherein the second indication information comprises a first bitmap and a second bitmap, wherein
the first bitmap indicates locations of the plurality of non-zero first weighting coefficients in the first weighting coefficient matrix, and the second bitmap indicates locations of the plurality of non-zero second weighting coefficients in the second weighting coefficient matrix.

9. The method according to claim 8, wherein the first indication information comprises information bits of a plurality of non-zero first weighting coefficients other than maximum non-zero first weighting coefficients respectively corresponding to the $K_s$ spatial domain eigenbases in the first weighting coefficient matrix, and information bits of a plurality of non-zero second weighting coefficients other than maximum non-zero second weighting coefficients respectively corresponding to the $K_f$ frequency domain eigenbases in the second weighting coefficient matrix;

an information bit of a non-zero first weighting coefficient corresponding to a first spatial domain eigenbasis in the first weighting coefficient matrix is obtained by normalizing, based on a maximum non-zero first weighting coefficient corresponding to the first spatial domain eigenbasis, a plurality of non-zero first weighting coefficients corresponding to the first spatial domain eigenbasis, and the first spatial domain eigenbasis is any one of the $K_s$ spatial domain eigenbases; and
an information bit of a non-zero second weighting coefficient corresponding to a first frequency domain eigenbasis in the second weighting coefficient matrix is obtained by normalizing, based on a maximum non-zero second weighting coefficient corresponding to the first frequency domain eigenbasis, a plurality of non-zero second weighting coefficients corresponding to the first frequency domain eigenbasis, and the first frequency domain eigenbasis is any one of the $K_f$ frequency domain eigenbases.

10. The method according to any one of claims 1 to 9, wherein sending the first indication information to the access network device comprises:

periodically sending the first indication information to the access network device based on a first reporting period; and
the method further comprises:

periodically sending third indication information to the access network device based on a second reporting period, wherein the third indication information indicates a third weighting coefficient matrix, wherein
a weighted sum of the third weighting coefficient matrix, the $K_s$ spatial domain eigenbases, and the $K_f$ frequency domain eigenbases is used to determine a precoding matrix; and
the first reporting period is longer than the second reporting period.

11. A basis feedback method, comprising:

receiving a reference signal from an access network device, wherein the reference signal indicates a terminal device to feed back a used space-frequency eigenbasis; and
sending fourth indication information to the access network device, wherein the fourth indication information indicates a fourth weighting coefficient matrix, wherein
a weighted sum of the fourth weighting coefficient matrix and $G_{sf}$ space-frequency bases is used to determine $K_{sf}$ space-frequency eigenbases, and reporting priorities of a plurality of non-zero fourth weighting coefficients comprised in the fourth weighting coefficient matrix are related to sequence numbers of space-frequency bases associated with the non-zero fourth weighting coefficients and sequence numbers of space-frequency eigenbases associated with the non-zero fourth weighting coefficients.

12. The method according to claim 11, wherein the fourth indication information comprises at least J information bit groups in N information bit groups, wherein N is a positive integer, and J is a positive integer less than or equal to N; and

an $n^{th}$ information bit group in the N information bit groups comprises information bits of non-zero fourth weighting coefficients corresponding to $K_{sfn}$ space-frequency eigenbases, wherein $\sum_{n=1}^{N} K_{sfn} = K_{sf}$ ; or
an $n^{th}$ information bit group in the N information bit groups comprises information bits of $N_{sfn}$ non-zero fourth weighting coefficients, wherein $\sum_{n=1}^{N} N_{sfn} = N_{sf}$ , and $N_{sf}$ represents a total quantity of non-zero fourth weighting coefficients comprised in the fourth weighting coefficient matrix.

13. The method according to claim 12, wherein when n=1, 2, ..., or N-1, $K_{sfn} = \left\lceil K_{sf}/N \right\rceil$ , or when n=N, $K_{sfn} = K_{sf} - (N-1)\left\lceil K_{sf}/N \right\rceil$ ; or

when n=1, 2, ..., or N-1, $N_{sfn} = \left\lceil N_{sf}/N \right\rceil$ , or when n=N, $N_{sfn} = N_{sfn} - (N-1)\left\lceil N_{sf}/N \right\rceil$ .

14. The method according to claim 12 or 13, wherein sending the fourth indication information to the access network device comprises:

when a quantity of reporting resources of the terminal device is greater than or equal to a quantity of resources of the N information bit groups, sending the N information bit groups to the access network device; or
when a quantity of reporting resources of the terminal device is less than a quantity of resources of the N information bit groups, sending a 1$^{st}$ information bit group to the J$^{th}$ information bit group in the N information bit groups to the access network device based on the quantity of reporting resources; or
when a quantity of reporting resources of the terminal device is less than a quantity of resources of the N information bit groups, sending a 1$^{st}$ information bit group to a J$^{th}$ information bit group and a part of information bits in a (J+1)$^{th}$ information bit group to the access network device based on the quantity of reporting resources.

15. The method according to claim 11, wherein sending the fourth indication information to the access network device comprises:

when a quantity of reporting resources of the terminal device is less than a quantity of resources of information bits of the non-zero fourth weighting coefficients in the fourth weighting coefficient matrix, sending information bits of a part of the non-zero fourth weighting coefficients in the fourth weighting coefficient matrix to the access network device based on the quantity of reporting resources, wherein a quantity of resources of the information bits of the part of the non-zero fourth weighting coefficients satisfies the quantity of reporting resources of the terminal device, and reporting priorities of the part of the non-zero fourth weighting coefficients are all higher than a reporting priority of a non-zero fourth weighting coefficient other than the part of the non-zero fourth weighting coefficients in the fourth weighting coefficient matrix; or
when a quantity of reporting resources of the terminal device is less than a quantity of resources of information bits of the non-zero fourth weighting coefficients in the fourth weighting coefficient matrix, sending, to the access network device based on the quantity of reporting resources, information bits of non-zero fourth weighting coefficients corresponding to a part of the space-frequency eigenbases in the fourth weighting coefficient matrix, wherein the part of the space-frequency eigenbases are space-frequency eigenbases whose sequence numbers are less than g in the $K_{sfn}$ space-frequency eigenbases.

16. The method according to any one of claims 11 to 15, wherein the reporting priorities of the plurality of non-zero fourth weighting coefficients comprised in the fourth weighting coefficient matrix satisfy:

$$Pri_{sf}(i,f,k^3) = 2L''k^3\pi'(f) + 2L''k + i;$$

or

$$Pri(i,f,k^3) = 2L''N_3k^3 + 2L''\pi'(f) + i,$$

wherein

$$\pi'(f) = min\left(2 \cdot n_3^{(f)}, 2 \cdot \left(N_3 - n_3^{(f)}\right) - 1\right),$$

the $G_{sf}$ space-frequency bases are a part or all of $2L''M_v''$ space-frequency bases generated by using $2L''$ spatial domain bases and $M_v''$ frequency domain bases, $i$ represents a sequence number of a spatial domain basis corresponding to the selected space-frequency basis, $f$ represents a sequence number of a frequency domain basis corresponding to the selected space-frequency basis, $k^3$ represents a sequence number of the space-frequency eigenbasis, $i = 0, 1, ..., $ or $2L''$- 1 , $f = 0, 1, ..., $ or $M_v''$- 1 , $k^3 = 0, 1, ..., $ or $K_{sf}$- 1, $Pri(i, f, k^3)$ represents a priority of a non-zero fourth weighting coefficient associated with the frequency domain basis with the sequence number f, the space-frequency eigenbasis with the sequence number $k^3$, and the spatial domain basis with the sequence number i, $N_3$ represents a total quantity of frequency domain bases, and $n_3^{(f)}$ represents a sequence number of the frequency domain basis with the sequence number $f$ in the $N_3$ frequency domain bases.

17. The method according to any one of claims 11 to 16, wherein sending the fourth indication information to the access network device comprises:

   periodically sending the fourth indication information to the access network device based on a first reporting period; and
   the method further comprises:

      periodically sending fifth indication information to the access network device based on a second reporting period, wherein the fifth indication information indicates a fifth weighting coefficient matrix, wherein
      a weighted sum of the fifth weighting coefficient matrix and the $K_{sf}$ space-frequency eigenbases is used to determine a precoding matrix; and
      the first reporting period is longer than the second reporting period.

18. A basis feedback method, comprising:

   sending a reference signal to a terminal device, wherein the reference signal indicates the terminal device to feed back a used spatial domain eigenbasis and a used frequency domain eigenbasis; and
   receiving first indication information from the terminal device, wherein the first indication information indicates a first weighting coefficient matrix and a second weighting coefficient matrix, wherein
   a weighted sum of the first weighting coefficient matrix and $2L'$ spatial domain bases in a spatial domain basis set is used to determine $K_s$ spatial domain eigenbases, and a weighted sum of the second weighting coefficient matrix and $M_v'$ frequency domain bases in a frequency domain basis set is used to determine $K_f$ frequency domain eigenbases; and
   reporting priorities of a plurality of non-zero first weighting coefficients in the first weighting coefficient matrix are related to sequence numbers of spatial domain bases associated with the non-zero first weighting coefficients and sequence numbers of spatial domain eigenbases associated with the non-zero first weighting coefficients, and reporting priorities of a plurality of non-zero second weighting coefficients in the second weighting coefficient matrix are related to sequence numbers of frequency domain bases associated with the non-zero second weighting coefficients and sequence numbers of frequency domain eigenbases associated with the non-zero second weighting coefficients.

19. The method according to claim 18, wherein the first indication information comprises at least J information bit groups in N information bit groups, wherein N is a positive integer, and J is a positive integer less than or equal to N; and

an n$^{th}$ information bit group in the N information bit groups comprises information bits of non-zero first weighting coefficients corresponding to $K_{sn}$ spatial domain eigenbases and information bits of non-zero second weighting coefficients corresponding to $K_{fn}$ spatial domain eigenbases, wherein $\sum_{n=1}^{N} K_{sn} = K_s$ , and $\sum_{n=1}^{N} K_{fn} = K_f$ ; or

an n$^{th}$ information bit group in the N information bit groups comprises information bits of non-zero first weighting coefficients corresponding to $l_n$ spatial domain bases and information bits of non-zero second weighting coefficients corresponding to $m_n$ spatial domain eigenbases, wherein $\sum_{n=1}^{N} l_n = 2L'$ , and $\sum_{n=1}^{N} m_n = M_v'$ ; or

an n$^{th}$ information bit group in the N information bit groups comprises information bits of $N_{sn}$ non-zero first weighting coefficients and information bits of $N_{fn}$ non-zero second weighting coefficients, wherein $\sum_{n=1}^{N} N_{sn} = N_s$ , and $\sum_{n=1}^{N} N_{fn} = N_f$ ; or $\sum_{n=1}^{N} N_{sn} = N_s - K_s$ , and $\sum_{n=1}^{N} N_{fn} = N_f - K_f$ ; $N_s$ represents a total quantity of non-zero weighting coefficients comprised in the first weighting coefficient matrix; and $N_f$ represents a total quantity of non-zero weighting coefficients comprised in the second weighting coefficient matrix.

20. The method according to claim 18 or 19, wherein the reporting priorities of the plurality of non-zero first weighting coefficients comprised in the first weighting coefficient matrix satisfy:

$$Pri_s(i, k^1) = 2L'k^1 + i;$$

or

$$Pri_s(i, k^1) = K_s i + k^1,$$

wherein

$i$ represents a sequence number of the selected spatial domain basis, $k^1$ represents a sequence number of the spatial domain eigenbasis, $i = 0, 1, ..., $ or $2L' - 1$, $k^1 = 0, 1, ..., $ or $K_s - 1$, and $Pri_s(i, k^1)$ represents a priority of a non-zero first weighting coefficient associated with the spatial domain basis with the sequence number i and the spatial domain eigenbasis with the sequence number k.

21. The method according to any one of claims 18 to 20, wherein the reporting priorities of the plurality of non-zero second weighting coefficients comprised in the second weighting coefficient matrix satisfy:

$$Pri_f(f, k^2) = M_v'k^2 + \pi'(f);$$

or

$$Pri_f(f, k^2) = K_f \pi'(f) + k^2;$$

or

$$Pri_f(f, k^2) = M_v'k^2 + f;$$

or

$$Pri_f(f, k^2) = K_f f + k^2,$$

wherein

$$\pi'(f) = min\left(2 \cdot n_3^{(f)}, 2 \cdot \left(N_3 - n_3^{(f)}\right) - 1\right),$$

$f$ represents a sequence number of the selected frequency domain basis, $k2$ represents a sequence number of the frequency domain eigenbasis, $f = 0, 1, ...,$ or $M_v$ - 1, $k2 = 0, 1, ...,$ or $K_f$ - 1, $Pri_f(f, k2)$ represents a priority of a non-zero second weighting coefficient associated with the frequency domain basis with the sequence number $f$ and the frequency domain eigenbasis with the sequence number $k2$, $N_3$ represents a total quantity of frequency domain bases, and $n_3^{(f)}$ represents a sequence number of the frequency domain basis with the sequence number $f$ in the $N_3$ frequency domain bases.

22. The method according to any one of claims 18 to 21, wherein the method further comprises:

receiving second indication information from the terminal device, wherein the second indication information comprises a first bitmap and a second bitmap, wherein
the first bitmap indicates locations of the plurality of non-zero first weighting coefficients in the first weighting coefficient matrix, and the second bitmap indicates locations of the plurality of non-zero second weighting coefficients in the second weighting coefficient matrix.

23. The method according to claim 22, wherein the first indication information comprises information bits of a plurality of non-zero first weighting coefficients other than maximum non-zero first weighting coefficients respectively corresponding to the $K_s$ spatial domain eigenbases in the first weighting coefficient matrix, and information bits of a plurality of non-zero second weighting coefficients other than maximum non-zero second weighting coefficients respectively corresponding to the $K_f$ frequency domain eigenbases in the second weighting coefficient matrix;

an information bit of a non-zero first weighting coefficient corresponding to a first spatial domain eigenbasis in the first weighting coefficient matrix is obtained by normalizing, based on a maximum non-zero first weighting coefficient corresponding to the first spatial domain eigenbasis, a plurality of non-zero first weighting coefficients corresponding to the first spatial domain eigenbasis, and the first spatial domain eigenbasis is any one of the $K_s$ spatial domain eigenbases; and
an information bit of a non-zero second weighting coefficient corresponding to a first frequency domain eigenbasis in the second weighting coefficient matrix is obtained by normalizing, based on a maximum non-zero second weighting coefficient corresponding to the first frequency domain eigenbasis, a plurality of non-zero second weighting coefficients corresponding to the first frequency domain eigenbasis, and the first frequency domain eigenbasis is any one of the $K_f$ frequency domain eigenbases.

24. A basis feedback method, comprising:

sending a reference signal to a terminal device, wherein the reference signal indicates the terminal device to feed back a used space-frequency eigenbasis; and
receiving fourth indication information from the terminal device, wherein the fourth indication information indicates a fourth weighting coefficient matrix, wherein
a weighted sum of the fourth weighting coefficient matrix and $G_{sf}$ space-frequency bases is used to determine $K_{sf}$ space-frequency eigenbases, and reporting priorities of a plurality of non-zero fourth weighting coefficients comprised in the fourth weighting coefficient matrix are related to sequence numbers of space-frequency bases associated with the non-zero fourth weighting coefficients and sequence numbers of space-frequency eigenbases associated with the non-zero fourth weighting coefficients.

25. The method according to claim 24, wherein the reporting priorities of the plurality of non-zero fourth weighting coefficients comprised in the fourth weighting coefficient matrix satisfy:

$$Pri_{sf}(i, f, k3) = 2L''k3\pi'(f) + 2L''k + i;$$

or

$$Pri(i,f,k^3) = 2L''N_3 k^3 + 2L''\pi'(f) + i,$$

wherein

$$\pi'(f) = min\left(2 \cdot n_3^{(f)}, 2 \cdot \left(N_3 - n_3^{(f)}\right) - 1\right),$$

the $G_{sf}$ space-frequency bases are a part or all of $2L''M_v''$ space-frequency bases generated by using $2L''$ spatial domain bases and $M_v''$ frequency domain bases, i represents a sequence number of a spatial domain basis corresponding to the selected space-frequency basis, f represents a sequence number of a frequency domain basis corresponding to the selected space-frequency basis, $k^3$ represents a sequence number of the space-frequency eigenbasis, $i = 0, 1, ...,$ or $2L''-1$, $f = 0, 1, ...,$ or $M_v''-1$, $k^3 = 0, 1, ...,$ or $K_{sf}-1$, $Pri(i, f, k^3)$ represents a priority of a non-zero fourth weighting coefficient associated with the frequency domain basis with the sequence number f, the space-frequency eigenbasis with the sequence number $k^3$, and the spatial domain basis with the sequence number i, $N_3$ represents a total quantity of frequency domain bases, and $n_3^{(f)}$ represents a sequence number of the frequency domain basis with the sequence number $f$ in the $N_3$ frequency domain bases.

26. A communication apparatus, comprising one or more modules or units configured to implement steps in the method according to any one of claims 1 to 25.

27. A communication apparatus, comprising a processor and a memory, wherein the memory is configured to store program instructions, and when the processor executes the program instructions, the method according to any one of claims 1 to 10 is performed, or the method according to any one of claims 11 to 17 is performed, or the method according to any one of claims 18 to 23, or the method according to claim 24 or 25 is performed.

28. A chip, wherein the chip is coupled to a memory, and is configured to read and execute program instructions stored in the memory, to implement the method according to any one of claims 1 to 10, the method according to any one of claims 11 to 17, the method according to any one of claims 18 to 23, or the method according to claim 24 or 25.

29. A computer-readable storage medium, wherein the computer storage medium stores computer-readable instructions, and when the computer-readable instructions are run on a communication apparatus, the method according to any one of claims 1 to 10 is performed, or the method according to any one of claims 11 to 17 is performed, or the method according to any one of claims 18 to 23 is performed, or the method according to claim 24 or 25 is performed.

30. A computer program product, wherein when the computer program product runs on a device, the device is caused to perform the method according to any one of claims 1 to 10, the method according to any one of claims 11 to 17, the method according to any one of claims 18 to 23, or the method according to claim 24 or 25.

FIG. 1

FIG. 2

| Access network device | | Terminal device |
|---|---|---|

301: Reference signal

302: First indication information, where the first indication information indicates a first weighting coefficient matrix and a second weighting coefficient matrix, where reporting priorities of a plurality of non-zero first weighting coefficients in the first weighting coefficient matrix are related to sequence numbers of spatial domain bases associated with the non-zero first weighting coefficients and sequence numbers of spatial domain eigenbases associated with the non-zero first weighting coefficients, and reporting priorities of a plurality of non-zero second weighting coefficients in the second weighting coefficient matrix are related to sequence numbers of frequency domain bases associated with the non-zero second weighting coefficients and sequence numbers of frequency domain eigenbases associated with the non-zero second weighting coefficients

FIG. 3

Spatial domain information bit group

Frequency domain information bit group

FIG. 4

Spatial domain
information bit group

Frequency domain
information bit group

FIG. 5

FIG. 6

Communication apparatus

Processing unit 703

Communication unit

Sending unit 701

Receiving unit 702

FIG. 7

Communication apparatus

Processor 810

Interface circuit 820

Memory 830

FIG. 8

## INTERNATIONAL SEARCH REPORT

| International application No. |
| --- |
| **PCT/CN2024/117733** |

**A.    CLASSIFICATION OF SUBJECT MATTER**

H04B7/06(2006.01)i

According to International Patent Classification (IPC) or to both national classification and IPC

**B.    FIELDS SEARCHED**

Minimum documentation searched (classification system followed by classification symbols)

IPC:H04B,H04W,H04Q,H04L

Documentation searched other than minimum documentation to the extent that such documents are included in the fields searched

Electronic data base consulted during the international search (name of data base and, where practicable, search terms used)

3GPP, CNTXT, ENTXTC, DWPI: 预编码矩阵, 基底, 基向量, 波束, 特征, 向量, 非dft, 加权, 系数, 矩阵, 空域, 频域, 空频, 上报, PMI, basis, vector, beam, eigen, non, dft, weight+, coefficient, matrix, space, spatial, frequency, domain, SD, FD, SF, report+

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111865372 A (HUAWEI TECHNOLOGIES CO., LTD.) 30 October 2020 (2020-10-30) description, paragraphs [0181]-[0273] | 1-30 |
| A | CN 112312464 A (HUAWEI TECHNOLOGIES CO., LTD.) 02 February 2021 (2021-02-02) entire document | 1-30 |
| A | CN 115706634 A (HUAWEI TECHNOLOGIES CO., LTD.) 17 February 2023 (2023-02-17) entire document | 1-30 |
| A | WO 2023044644 A1 (QUALCOMM INC.) 30 March 2023 (2023-03-30) entire document | 1-30 |
| A | CATT. "R1-1906344, Details on Type II CSI Enhancement" *3GPP TSG RAN WG1 Meeting #97*, 17 May 2019 (2019-05-17), entire document | 1-30 |
| A | NEW POSTCOM. "R1-130166, CSI Feedback Enhancements for Downlink MIMO" *3GPP TSG RAN WG1 Meeting #72*, 01 February 2013 (2013-02-01), entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 November 2024** | **27 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/117733**

| Patent document cited in search report | | | Publication date (day/month/year) | Patent family member(s) | | | Publication date (day/month/year) |
|---|---|---|---|---|---|---|---|
| CN | 111865372 | A | 30 October 2020 | WO | 2020221117 | A1 | 05 November 2020 |
| | | | | CN | 113452419 | A | 28 September 2021 |
| CN | 112312464 | A | 02 February 2021 | | None | | |
| CN | 115706634 | A | 17 February 2023 | WO | 2023011570 | A1 | 09 February 2023 |
| | | | | EP | 4373005 | A1 | 22 May 2024 |
| | | | | US | 2024178893 | A1 | 30 May 2024 |
| | | | | JP | 2024530013 | A | 14 August 2024 |
| WO | 2023044644 | A1 | 30 March 2023 | US | 2024356599 | A1 | 24 October 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311283262